# EUROPEAN PATENT APPLICATION

(11) **EP 4 398 535 A1**
(43) Date of publication of application: **10.07.2024**
(21) Application number: 23810707.2
(22) Date of filing: 19.04.2023
(51) Int. Cl.: H04L 41/0631

(54) **FAULT PROCESSING METHOD, AND RELATED DEVICE AND SYSTEM**

(30) Priority: 26.05.2022 CN 202210588103
(71) Applicant: Huawei Technologies Co., Ltd., Shenzhen, Guangdong 518129 (CN)
(72) Inventor: HONG, Rongfeng, Shenzhen, Guangdong 518129 (CN); LIU, Shixing, Shenzhen, Guangdong 518129 (CN); JI, Zhigang, Shenzhen, Guangdong 518129 (CN); LI, Ling, Shenzhen, Guangdong 518129 (CN); YAN, Kaokao, Shenzhen, Guangdong 518129 (CN); LI, Jie, Shenzhen, Guangdong 518129 (CN); WEN, Huafeng, Shenzhen, Guangdong 518129 (CN); WANG, Songlin, Shenzhen, Guangdong 518129 (CN)
(74) Representative: Goddar, Heinz J.
(86) International application number: PCT/CN2023/089341
(87) International publication number: WO 2023/226633

(57) **Abstract**

A fault handling method, a related device, and a system relate to the communication field, and are provided to quickly notify a fault after a network fault occurs, and therefore to reduce a quantity of data packets discarded due to the network fault. A first network device receives a first data packet through an ingress port, and when a first forwarding path corresponding to the first data packet is faulty and there is no redundant path of the first forwarding path on the first network device, sends, through the ingress port of the first data packet, a first notification packet notifying that the first forwarding path is faulty. The first notification packet is generated by a data plane of the first network device, and the first notification packet is a data plane packet. Therefore, a network device that receives the first notification packet quickly processes the first notification packet through a data plane. Then the network device can quickly process a received data packet based on obtained fault information. This can reduce a quantity of data packets discarded after a fault occurs.

## Description

### CROSS-REFERENCE TO RELATED APPLICATIONS

This application claims priority to Chinese Patent Application No. 202210588103.9, filed with the China National Intellectual Property Administration on May 26, 2022 and entitled "FAULT HANDLING METHOD, RELATED DEVICE, AND SYSTEM", which is incorporated herein by reference in its entirety.

### TECHNICAL FIELD

This application relates to the communication field, and in particular, to a fault handling method, a related device, and a system.

### BACKGROUND

In a data center network, link faults caused by human factors or device component factors are almost inevitable. Once a link fault occurs, a data packet sent to a port corresponding to a faulty link is discarded, greatly affecting service performance.

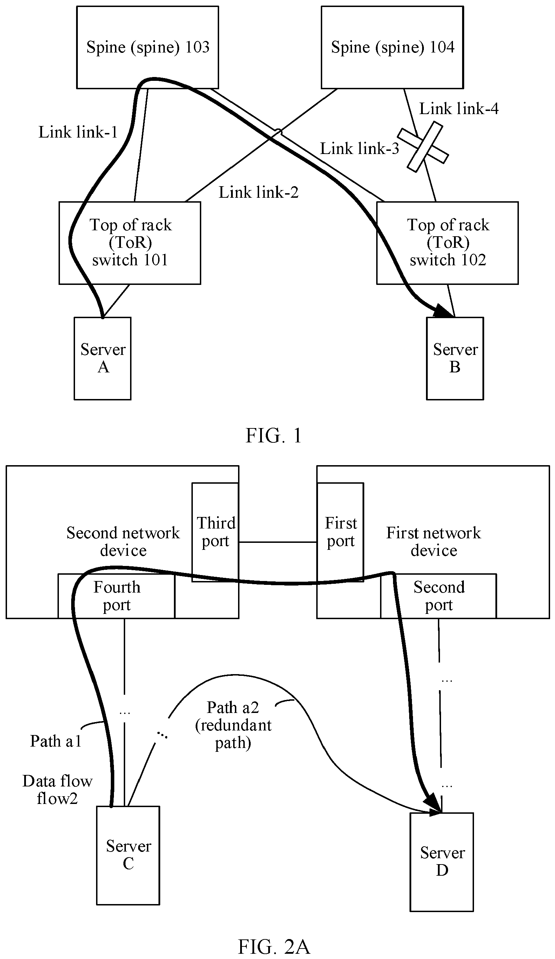

FIG. 1 shows an example of a schematic diagram of a possible network architecture. As shown in FIG. 1, a server A is connected to a server B via network devices. For example, the network devices are top of rack (top of rack, ToR) switches (ToR101 and ToR102) and spine (spine) switches (spine103 and spine104) in FIG. 1. The server A is connected to ToR101, ToR101 is separately connected to spine103 and spine104 (an identifier of a link between ToR101 and spine103 is link-1, and an identifier of a link between ToR101 and spine104 is link-2), spine103 and spine104 are separately connected to ToR102 (an identifier of a link between ToR102 and spine103 is link-3, and an identifier of a link between ToR102 and spine 104 is link-4), and the server B is connected to ToR102.

When all links (link-1, link-2, link-3, and link-4) in the network architecture are normal, each network device in the network architecture may calculate, by using a dynamic routing protocol, two equal-cost paths for a data flow (for example, a data flow flow1) from the server A to the server B, where the two equal-cost paths are respectively a path 1 (link-1, link-3) and a path 2 (link-2, link-4). Each network device in the network architecture selects a path (for example, selects the path 2 (link-2, link-4) based on a payload balancing algorithm) as a path of the data flow flow 1.

If a fault occurs in the network architecture (for example, a fault occurs on link-4 in FIG. 1), the network devices may periodically exchange information by using a control plane dynamic routing protocol. Specifically, control plane packets are sent between the network devices to obtain new topology information. Further, the network devices recalculate a path for the data flow flow1 based on the new topology information, to obtain a unique path (link-1, link-3) of the data flow flow1. The network device (for example, ToR101) updates, based on the path, a routing entry that is on the network device (for example, ToR101) and that is used to guide forwarding of the data flow flow1. Further, the network device (for example, ToR101) forwards a data packet of the data flow flow1 based on an updated routing entry. For example, ToR101 sends the data packet of the data flow flow1 to spine103 based on the updated routing entry, so that the data packet of the data flow flow1 can bypass a faulty link.

In the foregoing solution, link switching can be implemented when a fault occurs on a link. However, convergence time of the solution in which the network devices exchange information based on the control plane dynamic routing protocol, recalculates a route, and updates the routing entry is usually at a second level while a fault convergence performance requirement of some services (for example, an online transaction high-performance service) is at a several-millisecond or even sub-millisecond level. A path switching convergence technology based on the control plane dynamic routing protocol cannot meet a reliability assurance requirement of the online transaction high-performance service (a database or storage), and the like. After a fault occurs, a large quantity of data packets transmitted on a path affected by the fault are discarded.

### SUMMARY

This application provides a fault handling method, a related device, and a system, to quickly notify a fault after a network fault occurs, and therefore to reduce a quantity of data packets discarded due to the network fault.

According to a first aspect, an embodiment of this application provides a fault handling method. The method may be performed by a first network device or a unit, a module, or a chip in the first network device. In this application, an example in which the method is performed by the first network device is used for description. The method includes the following steps.

The first network device receives a first data packet through an ingress port. The first network device determines that a first forwarding path corresponding to the first data packet is faulty. When there is no redundant path of the first forwarding path on the first network device, the first network device sends a first notification packet through the ingress port. The first notification packet notifies that the first forwarding path is faulty, and the first notification packet is generated by a data plane of the first network device.

Because the first network device generates the first notification packet on the data plane, a speed at which the first network device generates the first notification packet is high. In addition, because the first notification packet is a data plane packet, a second network device that receives the first notification packet can quickly learn that the first forwarding path is faulty. Then the second network device can quickly process a received data packet based on obtained fault information. This can reduce a quantity of data packets discarded after a fault occurs and before a routing table update of each network device is completed.

In a possible implementation, when there is a redundant path of the first forwarding path on the first network device, the first network device sends the first data packet through the redundant path of the first forwarding path. When determining that the first forwarding path corresponding to the first data packet is faulty, the first network device may send the first data packet through the redundant path of the first forwarding path. Therefore, a possibility that the first data packet successfully reaches a destination address can be improved.

In a possible implementation, the first network device determines an egress port used to forward the first data packet, where the egress port corresponds to the first forwarding path. The first network device determines, based on a status of the egress port, that the first forwarding path is faulty.

Because the first network device may determine, by monitoring the status of the egress port of the first network device, whether the first forwarding path is faulty, a simple and quick determining manner may be provided for determining whether the first forwarding path is faulty. In another possible implementation, the first network device may obtain the status of the egress port of the first network device by using a component on the data plane. In this way, the first network device can obtain the status of the egress port of the first network device more quickly, and then the first network device can determine, more quickly based on the status of the egress port of the first network device, whether the first forwarding path is faulty.

In a possible implementation, the first network device obtains the status of the egress port based on a port state table. When the status of the egress port is a specified state, the first network device determines that the first forwarding path is faulty.

Because the first network device stores the port state table, the first network device can obtain the status of the egress port on the first network device in a simple method. In another possible implementation, the port state table may be stored on the data plane of the first network device, and the first network device may read the port state table by using the component on the data plane, to obtain the status of the egress port of the first network device more quickly.

In a possible implementation, the first network device periodically reads, by using the component of the data plane, a value of a register used to record the status of the egress port. The first network device updates the status of the egress port in the port state table based on the value of the register.

Because the first network device may periodically read, by using the component on the data plane, the value of the register used to record the status of the egress port of the first network device, the first network device can quickly obtain the status of the egress port of the first network device. Therefore, when the status of the egress port of the first network device changes, the first network device can quickly refresh the status of the egress port in the port state table.

In a possible implementation, the first network device sends at least one probe packet through the egress port, where the at least one probe packet is generated by the data plane of the first network device. The first network device updates the status of the egress port in the port state table to the specified state when the first network device does not receive a response packet for one probe packet or a plurality of consecutive probe packets in the at least one probe packet within preset duration.

Because the first network device may generate the probe packet on the data plane, the first network device can quickly generate the probe packet. In addition, because the probe packet is a data plane packet, a network device that receives the probe packet may process the probe packet on the data plane, and generate the response packet of the probe packet on the data plane. Therefore, a generation speed of the response packet of the probe packet is also high. Further, because the first network device processes the response packet of the probe packet on the data plane, the first network device can monitor a state of a port quickly (for example, at a microsecond level) by sending the probe packet.

In a possible implementation, the first notification packet includes indication information, where the indication information indicates that the first notification packet is a fault notification packet. Because the first notification packet includes the indication information, a network device that receives the first notification packet can identify the fault notification packet in a simple and accurate manner.

In a possible implementation, the first notification packet includes address information, where the address information is carried in a payload of the first notification packet, and the address information includes a destination IP address of the first data packet and/or an IP address prefix corresponding to the destination IP address.

Because the first notification packet carries the address information, a network device that receives the first notification packet may determine, based on the address information, a fault occurs on which path. Because the address information includes the destination IP address of the first data packet and/or the IP address prefix corresponding to the destination IP address, the network device that receives the first notification packet may determine, based on the destination IP address in the received data packet, whether a forwarding path corresponding to the data packet on the network device is faulty. This solution is simple and easy to implement, so that a speed of determining, by the network device, whether the forwarding path corresponding to the data packet on the network device is faulty can be accelerated.

In a possible implementation, when the first notification packet is a user datagram protocol UDP packet, the indication information includes first preset values/a first preset value carried in a destination port number field and/or a source port number field in a UDP header of the first notification packet.

Because the indication information is carried in the existing destination port number field and/or source port number field of the UDP packet, there is no need to additionally add a field to the UDP packet to carry the indication information. This can reduce a length of the first notification packet as much as possible, accelerate a transmission speed of the first notification packet, and can also be better compatible with a conventional technology.

In a possible implementation, when a first data plane notification packet is an Ethernet packet, the indication information includes a second preset value carried in an Ethernet type field of the first notification packet.

Because the indication information is carried in the existing Ethernet type field of the Ethernet packet, there is no need to additionally add a field to the UDP packet to carry the indication information. This can reduce a length of the first notification packet as much as possible, accelerate a transmission speed of the first notification packet, and can also be better compatible with a conventional technology.

In a possible implementation, a packet header of the first notification packet further includes information indicating the first data packet. The information indicating the first data packet includes at least one of the following: a source MAC address of the first data packet, a destination MAC address of the first data packet, a source IP address of the first data packet, or a destination IP address of the first data packet.

In this way, in a subsequent process in which staff perform query, it may be found that the first notification packet has an association relationship with the first data packet, so that more information can be provided for the staff.

In a possible implementation, the first notification packet meets at least one of the following: a source MAC address of the first notification packet is the destination MAC address of the first data packet, and a destination MAC address of the first notification packet is the source MAC address of the first data packet; or a source IP address of the first notification packet is the destination IP address of the first data packet, and a destination IP address of the first notification packet is the source IP address of the first data packet. In this case, the first network device may alternatively send the first notification packet based on the destination IP address and/or the destination MAC address in the first notification packet.

According to a second aspect, an embodiment of this application provides a fault handling method. The method may be performed by a second network device or a unit, a module, or a chip in the second network device. In this application, an example in which the method is performed by the second network device is used for description. The method includes the following steps.

The second network device receives a first notification packet from a first network device, where the first notification packet notifies that a first forwarding path is faulty, the first forwarding path is a forwarding path corresponding to a first data packet, and the first network device is a downstream network device of the second network device. The second network device receives a second data packet through an ingress port, where the second data packet and the first data packet have a same destination IP address. The second network device determines that a second forwarding path corresponding to the second data packet is faulty, where the second forwarding path includes the first forwarding path. When there is no redundant path of the second forwarding path on the second network device, the second network device sends a second notification packet through the ingress port, where the second notification packet notifies that the second forwarding path is faulty, and the second notification packet is generated by a data plane of the second network device.

Because the first notification packet is a data plane packet, the second network device can quickly learn that the first forwarding path is faulty. Then the second network device can quickly process a received data packet based on obtained fault information. This can reduce a quantity of data packets discarded after a fault occurs and before a routing table update of each network device is completed.

In a possible implementation, the first notification packet includes indication information and address information. The indication information indicates that the first notification packet is a fault notification packet. The address information is carried in a payload of the first notification packet, and the address information includes a destination IP address of the first data packet and/or an IP address prefix corresponding to the destination IP address.

For related descriptions and beneficial effects, refer to the related descriptions of the first aspect. Details are not described herein again.

In a possible implementation, after the second network device receives the first notification packet from the first network device, the second network device stores, on the data plane of the second network device based on the first notification packet, a correspondence between the address information and a port on which the first notification packet is received.

In this way, after subsequently receiving the second data packet, the second network device may match the destination IP address of the second data packet and an egress port of the second data packet on the second network device with the correspondence, and then determine whether the second forwarding path corresponding to the second data packet is faulty. In addition, because the correspondence is stored on the data plane, the second network device quickly determines whether the second forwarding path corresponding to the second data packet is faulty.

In a possible implementation, when determining that a destination address of the second data packet successfully matches the address information in the correspondence, and the egress port corresponding to the second data packet is the port in the correspondence, the second network device determines that a fault occurs on the second forwarding path corresponding to the second data packet.

The second network device determines, based on the destination address of the second data packet and the egress port corresponding to the second data packet, whether the second forwarding path is faulty. In comparison with a solution in which whether the second forwarding path is faulty is determined only by using the destination address of the second data packet, determining in the solution in this application is performed based on a plurality of factors, and therefore, determining accuracy can be improved.

According to a third aspect, this application provides a network device. The network device includes a communication unit and a processing unit, and the communication unit includes an ingress port. The processing unit is configured to:
receive a first data packet through the ingress port of the communication unit, determine that a first forwarding path corresponding to the first data packet is faulty, and when there is no redundant path of the first forwarding path on a first network device, send a first notification packet through the ingress port of the communication unit, where the first notification packet notifies that the first forwarding path is faulty, and the first notification packet is generated by a data plane of the first network device.

Because the first network device generates the first notification packet on the data plane, a speed at which the first network device generates the first notification packet is high. In addition, because the first notification packet is a data plane packet, a second network device that receives the first notification packet can quickly learn that the first forwarding path is faulty. Then the second network device can quickly process a received data packet based on obtained fault information. This can reduce a quantity of data packets discarded after a fault occurs and before a routing table update of each network device is completed.

In a possible implementation, the communication unit further includes an egress port. The processing unit is specifically configured to: determine the egress port used to forward the first data packet, and determine, based on a status of the egress port, that the first forwarding path is faulty. The egress port corresponds to the first forwarding path.

In a possible implementation, the network device further includes a storage unit. The storage unit stores a port state table. The processing unit is specifically configured to: obtain the status of the egress port based on the port state table, and when the status of the egress port is a specified state, determine that the first forwarding path is faulty.

In a possible implementation, the processing unit is further configured to: periodically read, by using a component on the data plane, a value of a register used to record the status of the egress port, and update the status of the egress port in the port state table based on the value of the register.

In a possible implementation, the processing unit is further configured to: send at least one probe packet through the egress port of the communication unit, where the at least one probe packet is generated by the data plane of the first network device; and update the status of the egress port in the port state table to the specified state when no probe packet in the at least one probe packet or no response packets of a plurality of consecutive probe packets is/are received within preset duration.

For related descriptions and beneficial effects of the third aspect and the possible implementations of the third aspect, refer to the related descriptions of the first aspect and the possible implementations of the first aspect. Details are not described herein again.

According to a fourth aspect, this application provides a network device. The network device includes a communication unit and a processing unit. The communication unit includes an ingress port. The processing unit is configured to:
receive a first notification packet from a first network device by using the communication unit, receive a second data packet through the ingress port of the communication unit, determine that a second forwarding path corresponding to the second data packet is faulty, and when there is no redundant path of the second forwarding path on a second network device, send a second notification packet through the ingress port of the communication unit.

The first notification packet notifies that a first forwarding path is faulty, and the first forwarding path is a forwarding path corresponding to the first data packet. The first network device is a downstream network device of the second network device, and the second data packet and the first data packet have a same destination IP address. The second forwarding path includes the first forwarding path. The second notification packet notifies that the second forwarding path is faulty, and the second notification packet is generated by a data plane of the second network device.

Because the first notification packet is a data plane packet, the second network device can quickly learn that the first forwarding path is faulty. Then the second network device can quickly process a received data packet based on obtained fault information. This can reduce a quantity of data packets discarded after a fault occurs and before a routing table update of each network device is completed.

In a possible implementation, the processing unit is further configured to store, on the data plane of the second network device based on the first notification packet, a correspondence between address information and a port on which the first notification packet is received.

In a possible implementation, the communication unit further includes an egress port. The processing unit is specifically configured to: when determining that a destination address of the second data packet matches the address information in the correspondence, and the egress port corresponding to the second data packet is the port in the correspondence, determine that a fault occurs on the second forwarding path corresponding to the second data packet.

In a possible implementation, the processing unit is further configured to: when determining that the second forwarding path corresponding to the second data packet is not faulty, send the second data packet through the second forwarding path.

For related descriptions and beneficial effects of the fourth aspect and the possible implementations of the fourth aspect, refer to the related descriptions of the second aspect and the possible implementations of the second aspect. Details are not described herein again.

According to a fifth aspect, a network device is provided, including a processor and a communication interface. The processor may be coupled to a memory, and may be configured to perform the method in any one of the first aspect and the second aspect and any one of the possible implementations of the first aspect and the second aspect. Optionally, the network device further includes the memory.

In an implementation, the network device is a first network device or a second network device. When the network device is the first network device or the second network device, the communication interface may be a transceiver or an input/output interface. Optionally, the transceiver may be a transceiver circuit. Optionally, the input/output interface may be an input/output circuit.

In another implementation, the network device is a chip or a chip system. When the network device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a network system is provided, and the system includes the foregoing first network device and second network device.

According to a seventh aspect, a computer program product is provided. The computer program product includes a computer program (which may also be referred to as code or instructions). When the computer program is run, a computer is enabled to perform the method in any one of the possible implementations of the first aspect, or the computer is enabled to perform the method in any one of the implementations of the first aspect and the second aspect.

According to an eighth aspect, a computer-readable storage medium is provided. The computer-readable medium stores a computer program (which may also be referred to as code or instructions). When the computer program is run on a computer, the computer is enabled to perform the method in any one of the possible implementations of the first aspect, or the computer is enabled to perform the method in any one of the implementations of the first aspect and the second aspect.

According to a ninth aspect, a chip system is provided. The chip system may include a processor. The processor is coupled to a memory, and may be configured to perform the method in any one of the first aspect and the second aspect and any one of the possible implementations of any one of the first aspect and the second aspect. Optionally, the chip system further includes the memory. The memory is configured to store a computer program (which may also be referred to as code or instructions). The processor is configured to invoke the computer program from the memory and run the computer program, to enable a device on which the chip system is installed to perform the method in any one of the first aspect and the second aspect and any one of the possible implementations of any one of the first aspect and the second aspect.

According to a tenth aspect, a processing apparatus is provided, including an input circuit, an output circuit, and a processing circuit. The processing circuit is configured to receive a signal through the input circuit, and transmit a signal through the output circuit, so that the method in any one of the first aspect and the second aspect and any one of the possible implementations of the first aspect and the second aspect is implemented.

In a specific implementation process, the foregoing processing apparatus may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

### BRIEF DESCRIPTION OF DRAWINGS

FIG. 1 is a schematic diagram of a network architecture;
FIG. 2A is a possible schematic diagram of a system architecture according to an embodiment of this application;
FIG. 2B is another possible schematic diagram of a system architecture according to an embodiment of this application;
FIG. 3A is still another possible schematic diagram of a system architecture according to an embodiment of this application;
FIG. 3B is yet another possible schematic diagram of a system architecture according to an embodiment of this application;
FIG. 3C is still yet another possible schematic diagram of a system architecture according to an embodiment of this application;
FIG. 4 is a schematic flowchart of a fault handling method according to an embodiment of this application;
FIG. 5A is a possible schematic structural diagram of a first notification packet according to an embodiment of this application;
FIG. 5B is another possible schematic structural diagram of a first notification packet according to an embodiment of this application;
FIG. 6 is another schematic flowchart of a fault handling method according to an embodiment of this application;
FIG. 7A is a schematic flowchart of processing a first data packet according to an embodiment of this application;
FIG. 7B is another schematic flowchart of processing a first data packet according to an embodiment of this application;
FIG. 7C is a schematic flowchart of processing a second data packet according to an embodiment of this application;
FIG. 8A is a schematic diagram of a case in which a fault occurs in the system architecture shown in FIG. 3A;
FIG. 8B is a schematic diagram of a case after path switching is performed based on the fault case shown in FIG. 8A and by using a solution provided in embodiments of this application;
FIG. 9 is a schematic structural diagram of a network device according to an embodiment of this application;
FIG. 10A is a schematic structural diagram of a network device according to an embodiment of this application; and
FIG. 10B is another schematic structural diagram of a network device according to an embodiment of this application.

### DESCRIPTION OF EMBODIMENTS

Technical solutions in embodiments of this application may be applied to various communication systems, for example, a communication system based on an Ethernet technology, for example, interconnection between a server and an access switch and interconnection between switches that are inside a data center included in a data center network, carrier cross-metro interconnection or a backbone network, a mobile bearer fronthaul or backhaul field, metropolitan multi-service bearing, data center interconnect, industrial communication, and the like, and a system for communication between different components or modules in an industrial device or a communication device.

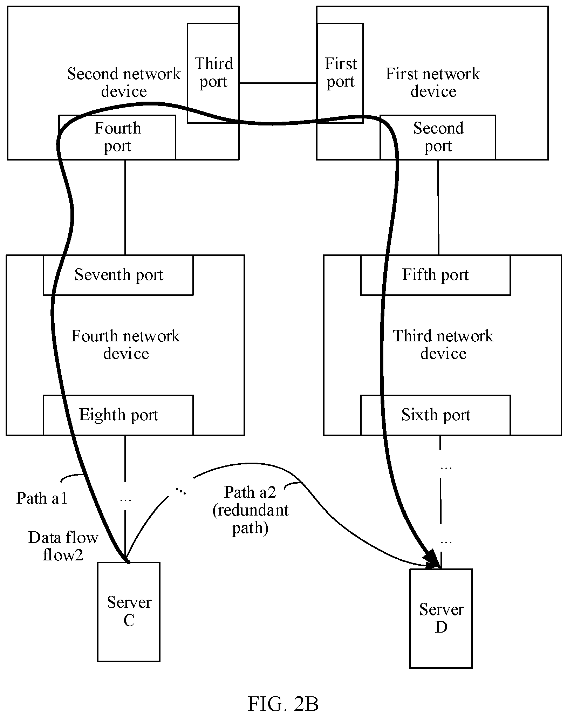

FIG. 2A and FIG. 2B are examples of schematic diagrams of a possible system architecture to which embodiments of this application are applicable.

The system architecture to which embodiments of this application are applicable may include a plurality of network devices and a plurality of servers. For example, FIG. 2A shows a first network device, a second network device, a server C, and a server D. A data packet of a data flow flow2 may be transmitted between the server C and the server D via a network device.

There are a plurality of paths between the server C and the server D. For example, FIG. 2A shows a path a1 and a path a2, and the path a2 is a redundant path of the path a1. Before a fault occurs, the data packet of the data flow flow2 may be transmitted through the path a1. After the fault occurs, a transmission path of the data packet of the data flow flow2 is switched to the path a2.

In FIG. 2A, if the data packet of the data flow flow2 is transmitted along the path a1, the data packet starts from the server C, passes through a fourth port and a third port of the second network device, passes through a first port and a second port of the first network device, and reaches the server D. In a process in which the data packet is transmitted along the path a1, the data packet may further pass through another network device or another port, which is not shown in FIG. 2A. If the data packet is transmitted along the path a2, the data packet may pass through at least one of the first network device and the second network device, or may not pass through the first network device and the second network device. This is not limited in embodiments of this application.

In FIG. 2B, an example in which four network devices are shown is used. A difference from FIG. 2A lies in that: If the data packet of the data flow flow2 is transmitted along the path a1, the data packet further passes through an eighth port and a seventh port of a fourth network device before passing through the second network device, and further passes through a fifth port and a sixth port of a third network device after passing through the first network device. Similarly, if the data packet is transmitted along the path a2, the data packet may pass through at least one of the third network device and the fourth network device, or may not pass through the third network device and the fourth network device. This is not limited in embodiments of this application.

A network device (for example, the first network device, the second network device, the third network device, and the fourth network device in FIG. 2B) in embodiments of this application may also be referred to as a network forwarding device, a forwarding device, an intermediate node, a switching node, or the like, and is a device having a data exchange (forwarding) function. The network device in embodiments of this application includes but is not limited to a data center switch, a carrier metropolitan area network router, a campus switch, an artificial intelligence (artificial intelligence, AI) and high-performance computing network switch, a router, a gateway, an internet protocol radio access network (Internet Protocol radio access network, IPRAN), a packet transport network (packet transport network, PTN) box or chassis-shaped switch device, and the like. The network device in embodiments of this application may alternatively be other apparatuses or devices having a data exchange function, or a component in these devices, for example, a chip or a chip system. This is not limited in embodiments of this application.

The network device in embodiments of this application may include a plurality of ports. In embodiments of this application, a port of the network device may be a physical port, or may be a logical port. One logical port may include one or more physical ports. The network device may be connected to another device (a network device and/or a server) through a port. In embodiments of this application, two devices (for example, two network devices, or a network device and a server) may be directly connected, or may be connected via another device.

It should be noted that, in FIG. 2A and FIG. 2B, an example in which two network devices are connected through a pair of ports is used for illustration. In actual application, two network devices may be connected through a plurality of pairs of ports. For example, in FIG. 2A and FIG. 2B, the third port of the second network device is connected to the first port of the first network device. In actual application, the second network device may be connected to another port of the first network device through another port. For example, a quantity and a sequence of all network devices that the data packet of the data flow flow2 passes through during transmission along the path a2 are the same as those of all network devices that the data packet passes through during transmission along the path a1. However, when the data packet is transmitted along the path a2, the data packet may be transmitted to a port other than the first port on the first network device through a port other than the third port on the second network device.

Each network device in the system architecture to which embodiments of this application are applicable may perform path calculation by using a dynamic routing protocol, to calculate at least two paths for the data flow flow2 from the server C to the server D. Each network device in the network architecture may select a path (for example, selects the path a1 in FIG. 2A or FIG. 2B based on a per-flow payload balancing algorithm) as a path of the data flow flow2. When a fault occurs on a link in the selected path (for example, the path a1 in FIG. 2A or FIG. 2B) (for example, a fault occurs on a link between the second port of the first network device and the fifth port of the third network device shown in FIG. 2B), network devices need to exchange information (that is, transmit a control plane packet) based on a control plane dynamic routing protocol, recalculate a route, and update a routing entry. Before the network devices exchange information based on the control plane dynamic routing protocol, recalculate the route, and update the routing entry, the data packet of the data flow flow2 cannot reach the server D, and may be discarded.

Based on the foregoing case, embodiments of this application provide a solution. When a fault occurs on a link of a network (for example, a fault occurs on the link between the second port of the first network device and the fifth port of the third network device shown in FIG. 2B), the network devices may transmit a data plane notification packet to each other to quickly notify a network fault, so that a network device having a redundant path quickly performs path switching based on obtained fault information. In this way, after the fault occurs and before the network devices exchange information based on the control plane dynamic routing protocol, recalculate a route, and update a routing entry, the data packet of the data flow flow2 may be transmitted through a switched path (the switched path is, for example, the path a2 in FIG. 2A or FIG. 2B). This can increase a quantity of data packets that are of the data flow flow2 and that reach the server D, and reduce a quantity of discarded data packets.

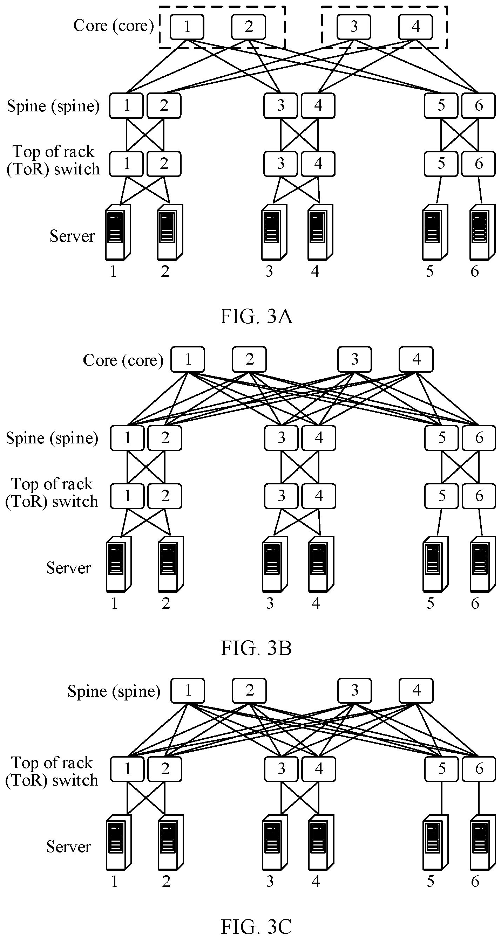

The solution provided in embodiments of this application may be applied to a Clos (Clos) network architecture, or may be applied to another network, for example, may be applied to a campus network having a high reliability requirement or a metropolitan area switching network using a Clos architecture. The Clos architecture is a switching network model proposed by Charles Clos. The Clos architecture is a multi-layer architecture. The solution provided in embodiments of this application may be applied to a network architecture of two layers, three layers, or more layers. Each layer may include a plurality of network devices, and each network device (for example, the network device may be a network switching device) at each layer is connected to one, more, or all network devices at a next layer. The following describes, by using FIG. 3A, FIG. 3B, and FIG. 3C as examples, schematic diagrams of several system architectures to which embodiments of this application are applicable.

FIG. 3A is shown by using an example in which a network architecture includes three-layer networking of ToR/spine/core (core). In FIG. 3A, the ToR layer includes six network devices, which are respectively identified by 1 to 6. The spine layer includes six network devices, which are respectively identified by 1 to 6. The core layer includes four network devices, which are respectively identified by 1 to 4. The system architecture includes six servers, which are respectively identified by 1 to 6. In actual application, a quantity of devices in a system architecture to which the solution provided in embodiments of this application is applied may be greater or less.

The network devices at the core layer may be divided into a plurality of groups. For example, in FIG. 3A, two network devices at the core layer are classified as one group. For example, a network device 1 at the core layer and a network device 2 at the core layer may be considered as one group (or one plane), and a network device 3 at the core layer and a network device 4 at the core layer may be considered as another group (or another plane). A network device 1 at the spine layer, a network device 3 at the spine layer, and a network device 5 at the spine layer may be considered as one group (or one plane). A network device 2 at the spine layer, a network device 4 at the spine layer, and a network device 6 at the spine layer may be considered as another group (or another plane). A networking manner shown in FIG. 3A may be referred to as independent-plane networking or multi-plane networking.

Still refer to FIG. 3A. Both the network device 1 at the core layer and the network device 2 at the core layer are connected to the network device 1 at the spine layer, the network device 3 at the spine layer, and the network device 5 at the spine layer, and both the network device 3 at the core layer and the network device 4 at the core layer are connected to the network device 2 at the spine layer, the network device 4 at the spine layer, and the network device 6 at the spine layer.

The network device 1 at the spine layer is separately connected to a network device 1 at the ToR layer and a network device 2 at the ToR layer. The network device 2 at the spine layer is separately connected to the network device 1 at the ToR layer and the network device 2 at the ToR layer. The network device 3 at the spine layer is separately connected to a network device 3 at the ToR layer and a network device 4 at the ToR layer. The network device 4 at the spine layer is separately connected to the network device 3 at the ToR layer and the network device 4 at the ToR layer. The network device 5 at the spine layer is separately connected to a network device 5 at the ToR layer and a network device 6 at the ToR layer. The network device 6 at the spine layer is separately connected to the network device 5 at the ToR layer and the network device 6 at the ToR layer.

As shown in FIG. 3A, one server may be connected to one or more network devices at the ToR layer. For example, in FIG. 3A, a server 1 is connected to the network device 1 at the ToR layer and the network device 2 at the ToR layer, a server 2 is separately connected to the network device 1 at the ToR layer and the network device 2 at the ToR layer, a server 3 is separately connected to the network device 3 at the ToR layer and the network device 4 at the ToR layer, a server 4 is separately connected to the network device 3 at the ToR layer and the network device 4 at the ToR layer, a server 5 is connected to the network device 5 at the ToR layer, and a server 6 is connected to the network device 6 at the ToR layer. A manner in which the server is connected to one network device at the ToR layer may also be referred to as a single-homing networking manner, and a manner in which the server is connected to two network devices at the ToR layer may also be referred to as a dual-homed networking manner.

FIG. 3B is shown by using an example in which a network architecture includes three-layer networking of ToR/spine/core (core). Devices included in the system architecture shown in FIG. 3B are similar to devices included in the system architecture shown in FIG. 3A. A difference from FIG. 3A lies in that each network device at the core layer in FIG. 3B is connected to all network devices at the spine layer.

FIG. 3C is shown by using an example in which a network architecture includes two-layer networking of ToR/spine. As shown in FIG. 3C, the ToR layer includes six network devices, which are respectively identified by 1 to 6. The spine layer includes three network devices, which are respectively identified by 1 to 3. The system architecture includes six servers, which are respectively identified by 1 to 6. In FIG. 3C, each network device at the spine layer is connected to all network devices at the ToR layer. For a manner of connecting the server and the network device at the ToR layer in FIG. 3C, refer to related descriptions of FIG. 3A. Details are not described again.

The following describes terms in embodiments of this application.

### 1. Data packet

The data packet (for example, the data packet of the data flow flow2, and a first data packet and a second data packet in subsequent content) may be a packet that includes to-be-sent information. For example, the "information" in the data packet may be service data generated in a process in which the server (for example, the server 1 in FIG. 3A, FIG. 3B, or FIG. 3C) processes a service, or service data generated by another device (for example, a terminal device) and received by the server.

### 2. Control plane packet and data plane packet

In embodiments of this application, a packet category includes the control plane packet and the data plane packet. A difference between the control plane packet and the data plane packet lies in that processing procedures by a network device on the control plane packet and the data plane packet are different.

### 2.1 Control plane packet

In embodiments of this application, if it is specified that a packet is a control plane packet, it may be understood as that the packet needs to be processed by the network device through a "slow path (slow path)".

Specifically, when a packet is a control plane packet, after the network device (for example, a switch) receives the packet (for example, the network device receives the packet on a data plane), the network device needs to first perform "processing of sending the packet to a CPU". The CPU may be a general-purpose CPU in the network device, for example, may be a CPU that processes an internet protocol packet. After the packet is sent to the CPU, the CPU may perform a corresponding operation based on the packet, or send the packet to the data plane of the network device again for processing, or the CPU may specify that the packet is to be forwarded through a specific port in an ASIC chip.

### 2.2 Data plane packet

In embodiments of this application, if it is specified that a packet is a data plane packet, it may be understood as that the packet needs to be processed by the network device through a "fast path (fast-path)".

Specifically, when a packet is a data plane packet, after receiving the packet on the data plane, the network device directly processes and forwards the packet on the data plane. That is, after receiving the data plane packet, the network device does not need to perform the "processing of sending the packet to a CPU". The packet is processed on the data plane, and may be processed by a component on the data plane of the network device. In embodiments of this application, the component on the data plane may include dedicated hardware or a chip, for example, a routing chip or a switching chip, for example, may be an ASIC chip or a network processor (network processor) chip. "Processing the packet on the data plane" may alternatively be implemented by software on the data plane of the network device. This is not limited in this application.

In embodiments of this application, if it is specified that a packet is a packet generated on the data plane, it may be understood as that the packet may be a packet generated by the component on the data plane of the network device. "Generating the packet on the data plane" may alternatively be implemented by the software on the data plane of the network device. This is not limited in this application.

It can be learned from the foregoing content that, when the packet is a control plane packet, the "processing of sending the packet to a CPU" needs to be performed on the network device. If the packet is a data plane packet, the packet may be directly processed on the data plane of the network device, and the "processing of sending the packet to the CPU" does not need to be performed. It can be learned that a speed at which the network device processes the data plane packet is quicker than a speed at which the network device processes the control plane packet.

It should be noted that, for a packet in embodiments of this application, when it is not explicitly specified that the packet is a data plane processing packet, and it is not specified that the packet is a control plane packet, the packet may be a data plane packet, or may be a control plane packet.

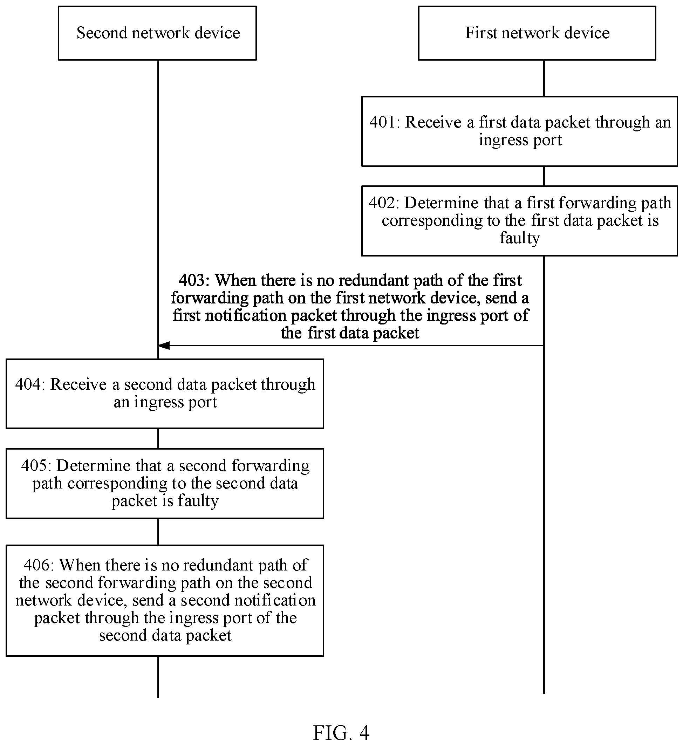

The following further describes the solution provided in embodiments of this application based on related content of the embodiments shown in FIG. 2A, FIG. 2B, FIG. 3A, FIG. 3B, and FIG. 3C. FIG. 4 is an example of a schematic flowchart of a fault handling method according to an embodiment of this application. An example in which the method shown in FIG. 4 is performed by a first network device and a second network device is used for illustration.

The first network device in this embodiment of this application may be the first network device in FIG. 2A or FIG. 2B. The second network device may be the second network device in FIG. 2A or FIG. 2B. The first network device and the second network device in this embodiment of this application may alternatively be two network devices at a same layer in the system architecture shown in FIG. 3A, FIG. 3B, or FIG. 3C, or may be two network devices at different layers. As shown in FIG. 3A, FIG. 3B, or FIG. 3C, for example, the first network device may be the network device at the ToR layer, and the second network device may be the network device at the spine layer. For another example, the first network device is the network device at the spine layer, and the second network device is the network device at the ToR layer. As shown in FIG. 3A and FIG. 3B, for example, the first network device may be the network device at the spine layer, and the second network device may be the network device at the core layer. For another example, the first network device is the network device at the core layer, and the second network device is the network device at the spine layer. The following uses the system architecture shown in FIG. 2B as an example to describe the solution provided in FIG. 4.

Alternatively, a solution on a first network device side in this embodiment of this application may be performed by a unit, a module, or a chip in the first network device, or another unit, module, chip, or device that has a capability of performing a method on the first network device side. Alternatively, a solution on a second network device side in this embodiment of this application may be performed by a unit, a module, or a chip in the second network device, or another unit, module, chip, or device that has a capability of performing a method on the second network device side.

As shown in FIG. 4, the method includes steps 401 to 406.

Step 401: The first network device receives a first data packet through an ingress port.

Refer to FIG. 2A or FIG. 2B. The first data packet is the data packet of the data flow flow2, and the first data packet in the data flow flow2 may be transmitted from the third port of the second network device to the first port of the first network device along the path a1. In a transmission direction of the first data packet, the first network device is a downstream network device of the second network device, and the second network device is an upstream network device of the first network device.

In this embodiment of this application, for distinguishing, a port that is on the first network device and on which the first data packet is received is referred to as an ingress port. In this embodiment of this application, the port of the first network device may also be referred to as an ingress port of the first data packet, or referred to as an ingress port of the first network device. In this embodiment of this application, an example in which the ingress port of the first network device may be the first port is used for description.

Step 402: The first network device determines that a first forwarding path corresponding to the first data packet is faulty.

The first forwarding path is a forwarding path corresponding to the first data packet, and the first forwarding path may also be described as a forwarding path corresponding to an egress port of the first data packet on the first network device, that is, the egress port of the first data packet on the first network device corresponds to the first forwarding path.

Refer to FIG. 2A or FIG. 2B. The first forwarding path may be a path starting from the second port of the first network device to the server D in the path a1. In this embodiment of this application, an example in which the egress port of the first data packet on the first network device is the second port is used for description. The second port may be configured to send a packet, or may be configured to receive a packet.

Step 403: When there is no redundant path of the first forwarding path on the first network device, the first network device sends a first notification packet through the ingress port of the first data packet.

Correspondingly, the second network device receives the first notification packet from the first network device. The system architecture shown in FIG. 2A or FIG. 2B is used as an example. The second network device may receive the first notification packet through the third port.

The first notification packet notifies that the first forwarding path is faulty. The first notification packet is generated by a data plane of the first network device, and the first notification packet is a data plane packet. In this way, the second network device may process the first notification packet by using a component on a data plane, so that a packet processing speed can be accelerated.

Step 404: The second network device receives a second data packet through an ingress port.

The second data packet and the first data packet have a same destination IP address. Refer to FIG. 2A or FIG. 2B. The second data packet may be a packet after the first data packet in the data flow flow2. In this embodiment of this application, for distinguishing, a port that is on the second network device and on which the second data packet is received is referred to as an ingress port. In this embodiment of this application, the port of the second network device may also be referred to as an ingress port of the second data packet, or referred to as an ingress port of the second network device. To describe the solutions provided in this embodiment of this application more clearly, an example in which the ingress port of the second network device is the fourth port is used for description in subsequent content.

Step 405: The second network device determines that a second forwarding path corresponding to the second data packet is faulty.

The second forwarding path includes the first forwarding path. The second forwarding path may be a forwarding path corresponding to the egress port of the second data packet on the second network device, that is, the egress port of the second network device corresponds to the second forwarding path.

Refer to FIG. 2A or FIG. 2B. The second forwarding path may be a path starting from the third port of the second network device to the server D in the path a1. In this embodiment of this application, an example in which the egress port of the second data packet on the second network device is the third port of the second network device in FIG. 2A or FIG. 2B is used for description.

In step 405, the second network device has received the first notification packet, and determines, based on the first notification packet, that a fault occurs on the first forwarding path. Therefore, in step 405, when the second network device determines that the second data packet needs to be transmitted through the second forwarding path, the second network device may determine, with reference to previously obtained information from the first notification packet, that a fault occurs on the second forwarding path. An implementation of how the second network device determines that the second forwarding path is faulty is described in more detail in subsequent content.

Step 406: When there is no redundant path of the second forwarding path on the second network device, the second network device sends a second notification packet through the ingress port of the second data packet.

The second notification packet notifies that the second forwarding path is faulty. The second forwarding path is a forwarding path corresponding to the second data packet. The second notification packet may be generated by a data plane of the second network device. In this way, the second network device can quickly generate the second notification packet. The second notification packet is a data plane packet. In this way, the fourth network device may process the second notification packet by using a component on the data plane, so that a packet processing speed can be accelerated.

It can be learned from the foregoing content that, when the first network device determines that the first forwarding path is faulty, and the first forwarding path has no redundant path, the first network device sends, to the second network device, the first notification packet notifying that the first forwarding path is faulty. Because the first network device generates the first notification packet on the data plane, a speed at which the first network device generates the first notification packet is high. In addition, because the first notification packet is the data plane packet, the second network device that receives the first notification packet can quickly learn that the first forwarding path is faulty.

Further, after the second network device quickly learns, based on the received data plane packet, that the first forwarding path is faulty, the second network device may determine that the second forwarding path is faulty, and when there is no redundant path of the second forwarding path, the second network device generates the second notification packet on the data plane. Therefore, a speed at which the second network device generates the second notification packet is high. In addition, because the second notification packet is the data plane packet, a network device that receives the second notification packet can quickly learn that the second forwarding path is faulty.

It can be learned that, after a fault occurs on a link in a network, in the solutions provided in this embodiment of this application, fault notification can be quickly performed, and each network device can quickly process a received data packet based on obtained fault information. This can reduce a quantity of data packets discarded after the fault occurs and before a routing table update of each network device is completed. According to the solutions provided in this embodiment of this application, a system on which a fault occurs can achieve a convergence speed at a several-millisecond or even sub-millisecond level. For example, the convergence speed may be one thousandth or less of a convergence speed based on a conventional control plane protocol.

In the foregoing step 402, that a fault occurs on the first forwarding path may include two possible cases: A fault occurs on a link corresponding to the second port of the first network device; or a fault occurs on a link corresponding to an egress port of the first data packet on a downstream network device of the first network device. The following describes the two possible cases.

Case A1: When the fault occurs on the link corresponding to the second port, the first network device determines that the first forwarding path is faulty.

The link in this embodiment of this application may be understood as a physical channel between two devices. For example, the link is a direct channel formed by connecting two network devices through a medium such as an optical fiber or a cable. Refer to FIG. 2B. The link of the second port may be a link between a port (that is, the fifth port) that is connected to the second port and that is on a downstream network device (that is, the third network device) of the first network device and the second port. When the data flow flow2 is transmitted along the path a1, the third network device is the downstream network device of the first network device.

In a possible implementation, the first network device determines that the egress port of the first data packet on the first network device is the second port, and then the first network device determines, based on a state of the second port, whether a fault occurs on the first forwarding path.

For example, when the state of the second port is a specified state, the first network device determines that the first forwarding path is faulty. For another example, when the state of the second port is not the specified state, the first network device determines that no fault occurs on the first forwarding path. In this embodiment of this application, the port may have a plurality of states. One state is referred to as the specified state in this embodiment of this application. The specified state may also have another name, for example, a faulty state or a non-working state. In this embodiment of this application, that the state of the second port is the specified state indicates that the link corresponding to the second port is faulty. That the link corresponding to the second port is faulty may include that the second port is faulty, an optical module corresponding to the second port is faulty, an optical fiber connected to the second port is faulty, a peer port (the peer port is a port that is connected to the second port and that is on the downstream network device of the first network device) of the second port is faulty, an optical module corresponding to the peer port of the second port is faulty, and the like.

Because the first network device may determine, by monitoring the state of the second port, whether the first forwarding path is faulty, a simple and quick determining manner may be provided for determining whether the first forwarding path is faulty. In another possible implementation, the first network device may obtain the state of the second port by using the component on the data plane. In this way, the first network device can obtain the state of the second port more quickly, and then the first network device can determine, more quickly based on the state of the second port, whether the first forwarding path is faulty.

In still another possible implementation, the first network device may store a table that records a state of a port of the first network device (for ease of understanding, the table is referred to as a port state table in this embodiment of this application, and the port state table may also have another name), and the first network device may obtain the state of the second port based on the port state table. Because the first network device stores the port state table, the first network device can obtain the state of the second port in a simple method. In yet another possible implementation, the first network device may store the port state table on the data plane, and the first network device reads the state of the second port in the port state table by using the component on the data plane. In this way, a speed of reading the state of the second port can be accelerated.

The first network device may maintain, based on the state of the second port, the state that is of the second port and that is recorded in the port state table. For example, when a fault occurs on the link corresponding to the second port, the first network device may set a value that corresponds to the state of the second port and that is in the port state table to "0". When no fault occurs on the link corresponding to the second port, the first network device may set the value that corresponds to the state of the second port and that is in the port state table to "1".

The first network device may determine, in a plurality of manners, that the link corresponding to the second port is faulty. The following uses a manner A1-1 and a manner A1-2 for description.

### Manner A1-1

The first network device reads a value of a register used to record the state of the second port, and the first network device determines, based on the value of the register, whether a fault occurs on the second port.

For example, the state that is of the second port and that is currently recorded in the port state table is not the specified state. When the value that is of the register used to record the state of the second port and that is read by the first network device indicates that the state of the second port is the specified state, the first network device updates the state of the second port in the port state table to the specified state.

Because the first network device obtains the state of the second port by reading the value of the register used to record the state of the second port, the first network device can quickly obtain the state of the second port. Therefore, when the state of the second port changes, the first network device can quickly refresh the state of the second port in the port state table. In another possible implementation, the first network device periodically reads, by using the component on the data plane, the value of the register used to record the state of the second port. In this way, the first network device can obtain the state of the second port more quickly.

In still another possible implementation, the state that is of the second port and that is currently recorded in the port state table is the specified state. When the value that is of the register used to record the state of the second port and that is read by the first network device indicates that the state of the second port is not the specified state, the first network device updates the state of the second port in the port state table to a non-specified state. The non-specified state may also have another name, for example, a non-faulty state or a working state. In this embodiment of this application, that the state of the second port is the non-specified state indicates that the link corresponding to the second port is not faulty.

### Manner A1-2

The first network device is connected to the third network device through the second port, and the first network device sends a probe packet to the third network device through the second port. After receiving the probe packet, the third network device usually sends a response packet of the probe packet to the first network device in specific time duration (for example, the duration is 100 microseconds, and timing starts from time at which the probe packet is sent). The first network device may determine the state of the second port based on a case of receiving the response packet of the probe packet.

For example, the first network device may update the state of the second port in the port state table to the specified state when receiving no response packet of the probe packet within preset time duration.

For another example, the first network device may periodically send the probe packet to the third network device through the second port, for example, periodically send the probe packet at time of a microsecond granularity (for example, 100 microseconds). In each periodicity, the third network device usually returns the response packet in specific time duration (for example, the duration is equal to duration of a periodicity of sending the probe packet). The first network device may collect statistics on and monitor a case of receiving the response packet of the probe packet. To improve accuracy of determining the state of the port, the first network device may update the state of the second port in the port state table to the specified state when receiving no response packets of a plurality of consecutive probe packets in specific time duration (for example, sending time of a probe packet 1 is used as start time, and response packets of the probe packet 1 and two consecutive probe packets following the probe packet 1 are not received within 300 microseconds).

In this embodiment of this application, the probe packet may be generated by the data plane of the first network device, and the response packet of the probe packet may be generated by a data plane of the third network device. In this way, a packet transmission speed can be improved.

The first network device may generate the probe packet on the data plane. In this way, the first network device can quickly generate the probe packet. In addition, the probe packet may be a data plane packet, and the third network device may process the probe packet on the data plane. The third network device may also generate the response packet of the probe packet on the data plane, so that a generation speed of the response packet of the probe packet can be accelerated. The first network device may also process the response packet of the probe packet on the data plane, to accelerate a processing speed of the response packet of the probe packet. It can be learned that the first network device can monitor the state of the port quickly (for example, at a microsecond level) by sending the probe packet.

In another possible implementation, after determining that the fault occurs on the link of the second port, the first network device may re-send the probe packet to the third network device after specific time duration or based on a trigger instruction. When the first network device may receive the response packet of the probe packet in the specific time duration, and the state of the second port in the port state table is the specified state, the first network device may further update the state of the second port in the port state table to the non-specified state.

Case A2: When the fault occurs on the link corresponding to the egress port of the first data packet on the downstream network device of the first network device, the first network device determines that the first forwarding path is faulty.

In Case A2, the first network device receives a notification packet from the downstream network device. The notification packet notifies that the fault occurs on the link corresponding to the egress port of the first data packet on the downstream network device of the first network device. An example in provided with reference to FIG. 2B. For example, the first network device receives a packet that is from the third network device and that notifies a link of the sixth port is faulty, and then the first network device may determine, based on the packet, that the first forwarding path is faulty. Case A2 is similar to a case in which the second network device determines that a fault occurs on the second forwarding path described in Case B1 in subsequent content. For details, refer to related descriptions of the subsequent Case B1.

It should be noted that, when the fault occurs on the link corresponding to the egress port of the downstream network device of the first network device, no fault may occur or a fault may also occur on the link corresponding to the second port of the first network device. In the foregoing step 402, the first network device may determine that the first forwarding path is faulty when determining that the fault occurs on the link corresponding to the second port and/or the fault occurs on the link corresponding to the egress port of the downstream network device of the first network device.

In a possible implementation, the first notification packet may include address information. For example, the address information may be carried in a payload of the first notification packet, or may be carried in a packet header of the first notification packet. Because the first notification packet carries the address information, a network device that receives the first notification packet may determine, based on the address information, a forwarding path on which a fault occurs.

The address information may include a destination internet protocol (Internet Protocol, IP) address of the first data packet and/or an IP address prefix corresponding to the destination IP address. Because the address information includes the destination IP address of the first data packet and/or the IP address prefix corresponding to the destination IP address, the network device that receives the first notification packet may determine, based on the destination IP address in the received data packet, whether a forwarding path corresponding to the data packet on the network device is faulty. This solution is simple and easy to implement, so that a speed of determining, by the network device, whether the forwarding path corresponding to the data packet on the network device is faulty can be accelerated.

The first notification packet may further include indication information. The indication information indicates that the first notification packet is a fault notification packet. Because the first notification packet includes the indication information, the network device that receives the first notification packet can identify the fault notification packet in a simple and accurate manner.

In a possible implementation, the packet header of the first notification packet further includes information indicating the first data packet. In this way, in a subsequent process in which staff perform query, it may be found that the first notification packet has an association relationship with the first data packet, so that more information can be provided for the staff.

The information indicating the first data packet may be carried in the packet header of the first notification packet. In a possible implementation, the information indicating the first data packet includes at least one of the following: a source media access control (medium access control, MAC) address of the first data packet, a destination MAC address of the first data packet, a source IP address of the first data packet, or a destination IP address of the first data packet. An IP address (for example, the source IP address and the destination IP address) in this embodiment of this application may be an IPv4 address or an IPv6 address.

In another possible implementation, when the packet header of the first notification packet carries the destination IP address of the first data packet, the payload of the first notification packet may not carry the address information, that is, the destination IP address that is of the first data packet and that is carried in the packet header of the first notification packet may also be considered as the address information, or it may be understood as that the address information is carried in the packet header of the first notification packet.

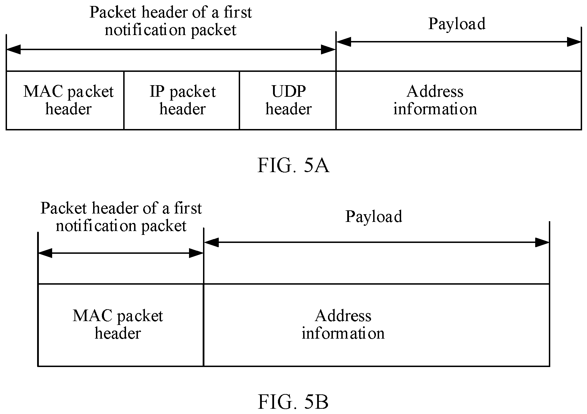

FIG. 5A is an example of a schematic structural diagram of a first notification packet. As shown in FIG. 5A, the first notification packet may be a user datagram protocol (User Datagram Protocol, UDP) packet. The first notification packet includes a packet header and a payload. The packet header of the first notification packet may include a MAC packet header, an IP packet header, and a UDP header.

Refer to FIG. 5A. Address information may be carried in the payload of the first notification packet. Indication information may be carried in the UDP header. The indication information includes first preset values/a first preset value in a destination port number field and/or a source port number field in the UDP header of the first notification packet. For example, the indication information may be an unused specific value carried in the destination port number field. For another example, the indication information may be unused specific values carried in the destination port number field and the source port number field. Because the indication information is carried in the existing destination port number field and/or source port number field of the UDP packet, there is no need to additionally add a field to the UDP packet to carry the indication information. This can reduce a length of the first notification packet as much as possible, accelerate a transmission speed of the first notification packet, and can also be better compatible with a conventional technology.

The information indicating the first data packet may be carried in at least one of the MAC packet header or the IP packet header. For example, a source MAC address of the first notification packet may be the destination MAC address of the first data packet, a destination MAC address of the first notification packet may be the source MAC address of the first data packet, a source IP address of the first notification packet may be the destination IP address of the first data packet, and a destination IP address of the first notification packet may be the source IP address of the first data packet. In this case, the first network device may alternatively send the first notification packet based on the destination IP address and/or the destination MAC address in the first notification packet.

In a possible implementation, the first network device may set a differentiated services code point (differentiated services code point, DSCP) field in the IP packet header of the first notification packet to a high priority, so that the network device that receives the first notification packet can preferentially process the first notification packet.

FIG. 5B is an example of another schematic structural diagram of a first notification packet. As shown in FIG. 5B, the first notification packet is an Ethernet packet. The first notification packet includes a packet header and a payload. The packet header of the first notification packet may include a MAC packet header.

Refer to FIG. 5B. Address information may be carried in the payload of the first notification packet. Indication information may be carried in the MAC packet header. The indication information may include a second preset value carried in an Ethernet type field of the first notification packet. For example, the indication information may be an unused specific value carried in the Ethernet type field. Because the indication information is carried in the existing Ethernet type field of the Ethernet packet, there is no need to additionally add a field to the UDP packet to carry the indication information. This can reduce a length of the first notification packet as much as possible, accelerate a transmission speed of the first notification packet, and can also be better compatible with a conventional technology.

Information indicating the first data packet may be carried in the MAC packet header. For example, a source MAC address of the first notification packet is the destination MAC address of the first data packet, and a destination MAC address of the first notification packet is the source MAC address of the first data packet. In this case, the first network device may alternatively send the first notification packet based on the destination MAC address in the first notification packet.

With reference to FIG. 5B, the following describes a possible example in which the first network device constructs the first notification packet. After receiving the first data packet, the first network device may reserve a MAC header of the first data packet, exchange a source MAC and a destination MAC, set a specific Ethernet type in the MAC header, and fill the address information in the payload of the first notification packet, so that the first notification packet shown in FIG. 5B can be obtained.

In step 403, in a possible implementation, the first network device may specify that the first notification packet is sent through the first port. In this case, because the first network device does not need to transmit the first notification packet based on the destination address (the destination IP address and/or the destination MAC address) in the packet header of the first notification packet, the packet header of the first notification packet may alternatively not include the destination address (the destination IP address and/or the destination MAC address).

In another possible implementation, the packet header of the first notification packet includes the destination address (the destination IP address and/or the destination MAC address). In this way, the first network device may send the first notification packet based on the destination address carried in the first notification packet. In this way, the solution may be the same as a solution for sending another packet, and is more compatible with the conventional technology.

A structure form of the second notification packet generated by the second network device in this embodiment of this application is similar to that of the first notification packet. For example, address information in the second notification packet may include a destination IP address of the second data packet and/or an IP address prefix corresponding to the destination IP address, the second notification packet includes indication information indicating that the second notification packet is a fault notification packet, and the packet header of the second notification packet further includes information indicating the second data packet. For related content, refer to the related descriptions of the first notification packet. Details are not described herein again. A notification packet (for example, the first notification packet or the subsequent second notification packet) in this embodiment of this application may also have another name, for example, may be referred to as a remote fault notification (remote fault notification, RFN) packet.

In the foregoing step 405, that a fault occurs on the second forwarding path may include two possible cases: A fault occurs on a link corresponding to an egress port of the second data packet on a downstream network device of the second network device; or a fault occurs on a link corresponding to the third port of the second network device. The following describes the two possible cases.

Case B 1: The fault occurs on the link corresponding to the egress port of the second data packet on the downstream network device of the second network device.

In a possible implementation, after the second network device receives the first notification packet, the second network device may store, on the data plane of the second network device based on the first notification packet, a correspondence between the address information and a port on which the first notification packet is received. In this way, after subsequently receiving the second data packet, the second network device may match the destination IP address of the second data packet and an egress port of the second data packet on the second network device with the correspondence, and then determine whether the second forwarding path corresponding to the second data packet is faulty. In addition, because the correspondence is stored on the data plane, the second network device quickly determines whether the second forwarding path corresponding to the second data packet is faulty.

In step 405, when determining that the destination address of the second data packet successfully matches the address information in the correspondence (for example, the destination IP address of the second data packet is the same as a destination IP address in the address information, and/or the IP address prefix corresponding to the destination IP address in the second data packet is the same as an IP address prefix that corresponds to the destination IP address and that is in the address information), and the egress port corresponding to the second data packet is the port in the correspondence, the second network device determines that the fault occurs on the second forwarding path corresponding to the second data packet.

The second network device determines, based on the destination address of the second data packet and the egress port corresponding to the second data packet, whether the second forwarding path is faulty. In comparison with a solution in which whether the second forwarding path is faulty is determined only by using the destination address of the second data packet, determining in the solution in this application is performed based on a plurality of factors, and therefore, determining accuracy can be improved, and a quantity of traffic that is incorrectly determined can be reduced.

For example, after receiving the first notification packet, the second network device may add an entry to a notification information table (the notification information table may also have another name, and in this application, the table is referred to as the notification information table for distinguishing) stored in a storage area of the second network device. The entry may include a port (for example, the third port) that receives the first notification packet and the address information in the first notification packet. After receiving the second data packet, the second network device forms a keyword (key) by using the destination address of the second data packet and the egress port of the second data packet, and uses the keyword to match an entry in the notification information table. If an entry can be matched, it indicates that the second forwarding path is faulty.

In another possible implementation, the entry may further include notification information, and the notification information indicates whether a faulty path corresponding to the entry is notified to an upstream device of the second network device. For example, an initial value of the notification information is set to 0. After subsequently sending the second notification packet, the second network device updates the value of the notification information to 1, to indicate that the second network device has notified the upstream network device that the second forwarding path is faulty.

In a possible implementation, after the second network device notifies the upstream network device that the second forwarding path is faulty, the second network device may no longer notify the upstream network device that the second forwarding path is faulty. This can reduce bandwidth overheads. In another possible implementation, after the second network device notifies the upstream network device that the second forwarding path is faulty, if the second network device subsequently receives the data packet from the data flow flow2, the second network device may continue to notify the upstream network device that the second forwarding path is faulty. This can further improve reliability of learning, by the upstream network device, that the second forwarding path is faulty.

In still another possible implementation, the second network device may alternatively receive a plurality of notification packets. For one notification packet in the plurality of notification packets, if the notification information table already stores a correspondence between a port that receives the notification packet and address information of the notification packet, the second network device may directly discard the notification packet, and does not need to repeatedly store, in the notification information table, the correspondence between the port that receives the notification packet and the address information of the notification packet.

Case B2: The fault occurs on the link corresponding to the third port of the second network device.

Related content of Case B2 is similar to related descriptions of Case A1. For example, the second network device may determine, based on a state of the third port, whether the fault occurs on the link corresponding to the third port. The second network device may also maintain a port state table of the second network device. In step 405, after receiving the second data packet, the second network device may search the port state table maintained by the second network device to determine the state of the third port. When the third port is in the specified state, it indicates that a link corresponding to the third port is faulty, and the second network device may determine that the second forwarding path is faulty. When the state of the third port is not the specified state, the second network device may further search the notification information table maintained by the second network device, to further determine whether the second forwarding path is faulty. Alternatively, the second network device may first search the notification information table, and then search the port state table. A solution in which the second network device determines the state of the third port is similar to the solution in which the first network device determines the state of the second port, and details are not described herein again.

It should be noted that the first network device may also maintain a notification information table of the first network device. For example, when the first network device queries the port state table maintained by the first network device and determines that the second port is in the specified state, it indicates that the link corresponding to the second port is faulty, and the first network device may determine that the first forwarding path is faulty. In this case, the first network device may no longer search the notification information table maintained by the first network device. When the state of the second port is not the specified state, the first network device may further search the notification information table maintained by the first network device, to further determine whether the first forwarding path is faulty. Alternatively, the first network device may first search the notification information table, and then search the port state table.

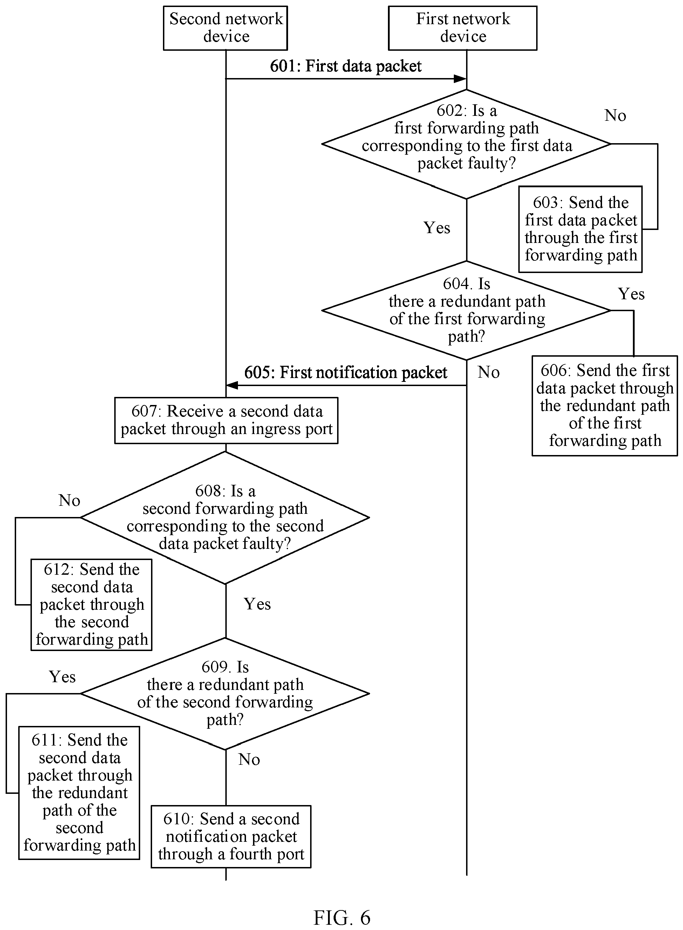

Based on related content and other content of the embodiments shown in FIG. 2A or FIG. 2B, FIG. 3A, FIG. 3B, FIG. 3C, FIG. 4, FIG. 5A, and FIG. 5B, FIG. 6 is an example of a schematic flowchart of a possible fault handling method according to an embodiment of this application. The embodiment shown in FIG. 6 may be considered as an extended embodiment of the embodiment shown in FIG. 4. For descriptions of an execution body of FIG. 6, refer to related descriptions of FIG. 4. Details are not described again. The following uses the system architecture shown in FIG. 2B as an example to describe the solution provided in FIG. 6.

As shown in FIG. 6, the method includes the following steps.

Step 601: A second network device sends a first data packet.

Correspondingly, a first network device receives the first data packet through an ingress port.

For related content of step 601, refer to related content of step 401. Details are not described again.

Step 602: The first network device determines whether a first forwarding path corresponding to the first data packet is faulty.

If the first network device determines that the first forwarding path corresponding to the first data packet is not faulty, the first network device performs step 603.

If the first network device determines that the first forwarding path corresponding to the first data packet is faulty, the first network device performs step 604.

Step 603: The first network device sends the first data packet through the first forwarding path.

Specifically, in step 603, because the first network device determines that no fault occurs on the first forwarding path, the first network device sends the first data packet through a found egress port of first data packet on the first network device.

Step 604: The first network device determines whether there is a redundant path of the first forwarding path on the first network device.

When there is no redundant path of the first forwarding path on the first network device, the first network device performs step 605.

When there is the redundant path of the first forwarding path on the first network device, the first network device performs step 606.

In a possible implementation, when there is no redundant path of the first forwarding path on the first network device, the first network device may further discard the first data packet.

Step 605: The first network device sends a first notification packet through the ingress port of the first data packet.

Correspondingly, the second network device receives the first notification packet from the first network device.

For related content of step 605, refer to related content of step 403. Details are not described again.

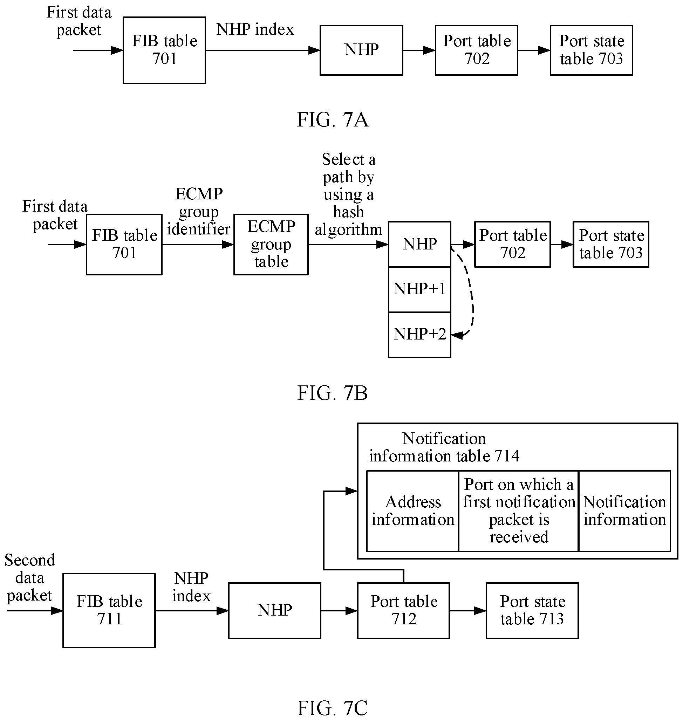

Based on the embodiments shown in step 605 and steps related to step 605, FIG. 7A is a schematic flowchart of processing the first data packet. As shown in FIG. 7A, after the first network device receives the first data packet, a component on a data plane of the first network device may record the ingress port of the first data packet. Further, the component on the data plane of the first network device queries a routing entry in a forwarding information (forwarding information base, FIB) table 701 by using a destination address of the first data packet and based on a longest routing prefix matching principle. If a query result is a single next hop index (next hop, NHP) index (index), it indicates that the first forwarding path has no redundant path. Further, the component on the data plane of the first network device may query a port table 702 to obtain an egress port corresponding to an NHP address. Further, the component on the data plane of the first network device queries a port state table 703 to determine a status of the egress port. If the status of the egress port is a specified state, the component on the data plane of the first network device implements an objective of notifying an upstream network device of a fault by performing step 605.

Step 606: The first network device sends the first data packet through the redundant path of the first forwarding path.

Based on the embodiments shown in step 606 and steps related to step 606, FIG. 7B is another schematic flowchart of processing the first data packet. As shown in FIG. 7B, after the first network device receives the first data packet, a component on a data plane of the first network device may record the ingress port of the first data packet. Further, the component on the data plane of the first network device queries a routing entry in a FIB table 701 by using a destination address of the first data packet and based on a longest routing prefix matching principle. If a query result is an equal-cost multi-path (equal-cost multi-path, ECMP) group identifier (group identifier), it indicates that there are a plurality of paths for transmitting the first data packet. Further, the first network device finds out a plurality of paths by querying an ECMP group table, and further selects, by using a hash algorithm, the first forwarding path as the path for transmitting the first data packet. The component on the data plane of the first network device may query a port table 702 to obtain an egress port corresponding to an NHP address in the first forwarding path. Further, the component on the data plane of the first network device queries a port state table 703 to determine a status of the egress port. If the status of the egress port is a specified state, the first network device performs step 606, to send the first data packet through the redundant path (for example, a selected path corresponding to NHP+2 shown by a dashed line in FIG. 7B) of the first forwarding path.

The first network device selects a redundant path of the first forwarding path as a transmission path of the first data packet in a plurality of manners. For example, the second network device may obtain hash key information (for example, a quintuple in the first data packet) of the first data packet, and then perform hash calculation on the hash key information based on a preset hash algorithm, to obtain a hash value. A path corresponding to the hash value is the first forwarding path. The first network device modifies the hash value to obtain a modified hash value (for example, adds 1 to the hash value to obtain the modified hash value). The first network device performs a modulo operation on a total quantity of all equal-cost paths based on the modified hash value, and determines, based on an obtained value, a path for transmitting the first data packet (because the hash value is modified, a selected path is different from the first forwarding path). Further, the first network device may query the port table to obtain an egress port corresponding to a next-hop address in the newly selected path for transmitting the first data packet, and send the first data packet through the egress port. In another possible implementation, the first network device may randomly select a path from the redundant paths of the first forwarding path as the transmission path of the first data packet or select a path from the redundant paths of the first forwarding path as the transmission path of the first data packet based on a payload amount of the paths.

It can be learned from the foregoing content that, when there is the redundant path of the first forwarding path on the first network device, the first network device sends the first data packet through the redundant path of the first forwarding path. When determining that the first forwarding path corresponding to the first data packet is faulty, the first network device may send the first data packet through the redundant path of the first forwarding path. Therefore, a possibility that the first data packet successfully reaches a destination address can be improved.

Step 607: The second network device receives a second data packet through the ingress port.

For related content of step 607, refer to related content of step 404. Details are not described again.

Step 608: The second network device determines whether a second forwarding path corresponding to the second data packet is faulty.

If the second network device determines that the second forwarding path corresponding to the second data packet is faulty, the second network device performs step 609.

If the second network device determines that no fault occurs on the second forwarding path corresponding to the second data packet, the second network device performs step 612.

For related content of determining, by the second network device, that the second forwarding path corresponding to the second data packet is faulty, refer to related content of step 405. Details are not described again.

Step 609: The second network device determines whether there is a redundant path of the second forwarding path on the second network device.

When there is no redundant path of the second forwarding path on the second network device, the second network device performs step 610.

When there is the redundant path of the second forwarding path on the second network device, the second network device performs step 611.

In a possible implementation, when there is no redundant path of the second forwarding path on the second network device, the second network device may further discard the second data packet.

Step 610: The second network device sends a second notification packet through a fourth port.

Correspondingly, a network device (for example, an eighth port of a fourth network device) connected to the fourth port of the second network device receives the second notification packet from the second network device. In this case, refer to FIG. 2B. The second data packet may be sent by the fourth network device to the second network device.

Based on the embodiments shown in step 610 and steps related to step 610, FIG. 7C is a schematic diagram of a fault handling method. As shown in FIG. 7C, after the second network device receives the second data packet through the fourth port, a component on a data plane of the second network device may record an ingress port (that is, the fourth port) of the second data packet. Further, the component on the data plane of the second network device quires a routing entry in a FIB table 711 by using a destination address of the second data packet and based on a longest routing prefix matching principle. If a query result is a single NHP index (index), it indicates that the second forwarding path has no redundant path. Further, the component on the data plane of the second network device may query a port table 712 to obtain an egress port corresponding to an NHP address. The second network device may further query a port state table 713 to determine a status of the egress port. When the status of the egress port is not a specified state, the component on the data plane of the second network device may query a notification information table 714, for example, forms a keyword by using the destination address of the second data packet and the egress port of the second data packet, and uses the keyword to match an entry in the notification information table. If an entry can be matched, it indicates that the second forwarding path is faulty. Further, the second network device may send the second notification packet through an ingress port (that is, the fourth port) of the second data packet. In a possible implementation, after the second network device sends the second notification packet, the second network device may set a value of notification information in the notification information table 714 to 1, to indicate that the second network device has notified an upstream network device that the second forwarding path is faulty.

Step 611: The second network device sends the second data packet through the redundant path of the second forwarding path.

For a solution in which the second network device selects the redundant path of the second forwarding path, refer to related content in which a first network device side selects the redundant path of the first forwarding path. Details are not described herein again. A difference lies in that the second network device may query the port state table 713 to determine that a state of a port of the second data packet is a non-specified state, and query the notification information table 714 to determine that the second forwarding path is faulty, while the first network device queries the port state table 703 to determine that the first forwarding path is faulty. The first network device may also maintain a notification information table. However, because the first network device has determined, by querying the port state table, that the first forwarding path is faulty, the first network device does not need to query the notification information table. Therefore, FIG. 7A and FIG. 7B do not show the notification information table maintained by the first network device.

Step 612: The second network device sends the second data packet through the second forwarding path.

It should be noted that, after a fault occurs on a link, network devices (for example, the first network device and the second network device) in the system architecture provided in this embodiment of this application further exchange information (that is, transmit a control plane packet) based on a control plane dynamic routing protocol, recalculate a route, and update a routing entry in addition to performing the solution provided in this embodiment of this application. After the network devices exchange information based on the control plane dynamic routing protocol, recalculate the route, and update the routing entry, a data packet of a data flow flow2 is forwarded based on an updated routing entry.

In a possible implementation, to save storage space, aging time may be set for an entry in the notification information table. Because convergence time of each network device based on a control plane protocol in the system architecture is usually several seconds or longer, the second network device may set second-level aging time for the entry in the notification information table. In this way, when an entry exists for several seconds, the entry may be deleted, to save storage space.

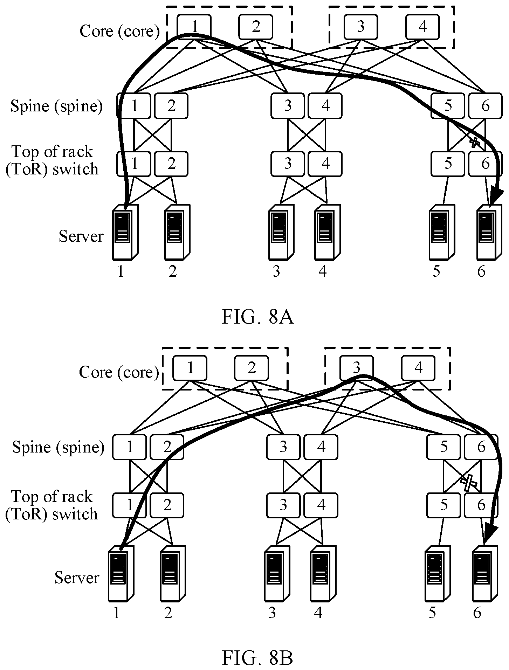

FIG. 8A is a schematic diagram of a case in which a fault occurs in the system architecture shown in FIG. 3A. FIG. 8B is a schematic diagram of a case after path switching is performed based on the fault case shown in FIG. 8A and by using the solution provided in embodiments of this application.

As shown in FIG. 8A, devices that are on a pass on which a data flow of a server 1 is transmitted to a server 6 and that are sequentially passed through include: the server 1, a network device 1 at a ToR layer, a network device 1 at a spine layer, a network device 1 at a core layer, a network device 5 at the spine layer, a network device 6 at the ToR layer, and the server 6. A destination address of the server 6 is, for example, 2.2.2.100.

Refer to FIG. 8A. A fault occurs on a link between the network device 6 at the ToR layer and the network device 5 at the spine layer. The network device 5 at the spine layer may perform the solution on the first network device side in FIG. 4 or FIG. 6, and the first forwarding path may be: the network device 5 at the spine layer, the network device 6 at the ToR layer, the server 6. The network device 5 at the spine layer quickly senses, through the data plane, that the fault occurs on the link between the network device 5 at spine layer and the network device 6 at the ToR layer, for example, may sense the fault by using a port state table maintained by network device 5 at the spine layer.

The network device 5 at the spine layer receives a data packet 1 from the network device 1 at the core layer, and the data packet 1 is a packet in the data flow from the server 1 to the server 6. The network device 5 at the spine layer determines an egress port of a forwarding path (for example, NHP: 3.3.3.3) of the data packet 1. Because there is no redundant path to the server 6 on the network device 5 at the spine layer, and a link of the egress port of the forwarding path (NHP: 3.3.3.3) is faulty, a component on a data plane of the network device 5 at the spine layer generates a notification packet 1, and sends the notification packet 1 to the network device 1 at the core layer. A payload of the notification packet 1 includes a destination address of the data packet 1: an address (2.2.2.100) of the server 6.

Correspondingly, the network device 1 at the core layer receives the notification packet 1, and stores, in a notification information table, a correspondence between a port (for example, a port 3 (25 Gigabit Ethernet (Gigabit Ethernet, GE) 1/0/3) of the network device 1 at the core layer) that receives the notification packet 1 and the address (2.2.2.100) of the server 6.

The network device 1 at the core layer receives a data packet 2 from the network device 1 at the spine layer, and the data packet 2 is a packet in the data flow from the server 1 to the server 6. The network device 1 at the core layer determines an egress port (25GE 1/0/3) of a forwarding path (NHP: 3.3.3.3) of the data packet 2. The network device 1 at the core layer forms key information by using a destination address (2.2.2.100) of the data packet 2 and the egress port (25GE 1/0/3) of the data packet 2, and successfully matches an entry in the notification information table. In this case, the network device 1 at the core layer determines that a forwarding path corresponding to the data packet 2 is faulty. Because there is no redundant path to the server 6 on the network device 1 at the core layer, a component on a data plane of the network device 1 at the core layer generates a notification packet 2, and sends the notification packet 2 to the network device 1 at the spine layer. A payload of the notification packet 2 includes the address (2.2.2.100) of the server 6. The network device 1 at the core layer sets notification (notification) information corresponding to the correspondence between the port (25GE 1/0/3) that receives the notification packet 1 and the address (2.2.2.100) of the server 6 in the notification information table to 1. It should be noted that, when the network device 5 at the spine layer is considered as the first network device, the network device 1 at the core layer may be considered as the second network device, the notification packet 1 may be considered as the first notification packet, the notification packet 2 may be considered as the second notification packet, the data packet 1 may be considered as the first data packet, and the data packet 2 may be considered as the second data packet.

Correspondingly, the network device 1 at the spine layer receives the notification packet 2, and stores, in the notification information table, a correspondence between a port (for example, the port 3 (25GE 1/0/1) of the network device 1 at the core layer) that receives the notification packet 2 and the address (2.2.2.100) of the server 6.

Similarly, the network device 1 at the spine layer receives a data packet 3 from the network device 1 at the ToR layer, and the data packet 3 is a packet in the data flow from the server 1 to the server 6. The network device 1 at the spine layer determines an egress port (25GE 1/0/1) of a forwarding path (NHP: 3.3.3.3) of the data packet 3. The network device 1 at the spine layer forms key information by using a destination address (2.2.2.100) of the data packet 3 and the egress port (25GE 1/0/1) of the data packet 3, and successfully matches an entry in the notification information table. In this case, the network device 1 at the spine layer determines that a forwarding path corresponding to the data packet 3 is faulty. Because there is no redundant path to the server 6 on the network device 1 at the spine layer, a component on a data plane of the network device 1 at the spine layer generates a notification packet 3, and sends the notification packet 3 to the network device 1 at the ToR layer. A payload of the notification packet 3 includes the address (2.2.2.100) of the server 6. The network device 1 at the spine layer sets notification (notification) information corresponding to the correspondence between the port (25GE 1/0/1) that receives the notification packet 2 and the address (2.2.2.100) of the server 6 in the notification information table to 1. It should be noted that, when the network device 1 at the core layer is considered as the first network device, the network device 1 at the spine layer may be considered as the second network device, the notification packet 2 may be considered as the first notification packet, the notification packet 3 may be considered as the second notification packet, the data packet 2 may be considered as the first data packet, and the data packet 3 may be considered as the second data packet.

Correspondingly, the network device 1 at the ToR layer receives the notification packet 3, and stores, in the notification information table, a correspondence between a port (for example, the port 3 (25GE 1/0/1) of the network device 1 at the ToR layer) that receives the notification packet 3 and the address (2.2.2.100) of the server 6.

The network device 1 at the ToR layer receives a data packet 4 from the server 1, and the data packet 4 is a packet in the data flow from the server 1 to the server 6. The network device 1 at the ToR layer determines an egress port (25GE 1/0/1) of a forwarding path (NHP: 3.3.3.3) of the data packet 4. The network device 1 at the ToR layer forms key information by using a destination address (2.2.2.100) of the data packet 4 and the egress port (25GE 1/0/1) of the data packet 3, and successfully matches an entry in the notification information table. In this case, the network device 1 at the ToR layer determines that a forwarding path (NHP: 3.3.3.3) corresponding to the data packet 4 is faulty. Because there is a redundant path (the redundant path NHP: 4.4.4.4) to the server 6 on the network device 1 at the ToR layer, the network device 1 at the ToR layer sends the data packet 4 through an egress port (25GE 1/0/2) path of the redundant path (NHP: 4.4.4.4). It should be noted that, the network device 1 at the ToR layer does not continue to notify a fault. Therefore, the network device 1 at the ToR layer still sets the notification (notification) information corresponding to the correspondence between the port (25GE 1/0/1) that receives the notification packet 2 and the address (2.2.2.100) of the server 6 in the notification information table to an initial value 0. It should be noted that, when the network device 1 at the spine layer may be considered as the first network device, the network device 1 at the ToR layer may be considered as the second network device, the notification packet 3 may be considered as the first notification packet, the data packet 3 may be considered as the first data packet, and the data packet 4 may be considered as the second data packet.

FIG. 8B shows an example of a path of a data packet 4 after path switching: a server 1, a network device 1 at a ToR layer, a network device 2 at a spine layer, a network device 3 at a core layer, a network device 6 at the spine layer, a network device 6 at the ToR layer, a server 6.

It should be noted that, in embodiments of this application, that a network element (for example, a network element A) receives information from another network element (for example, a network element B) may mean that the network element A directly receives the information from the network element B, or may mean that the network element A receives the information from the network element B via another network element (for example, a network element C). When the network element A receives the information from the network element B via the network element C, the network element C may transparently transmit the information, or may process the information, for example, include the information in different messages for transmission, or screen the information, and send only information obtained through screening to the network element A. Similarly, in various embodiments of this application, that the network element A sends information to the network element B may mean that the network element A directly sends the information to the network element B, or may mean that the network element A sends the information to the network element B via another network element (for example, the network element C).

The terms "system" and "network" may be used interchangeably in embodiments of this application. "At least one" means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. For example, "signaling/data" in embodiments of this application refers to signaling or data. "At least one item (piece) of the following" or a similar expression thereof indicates any combination of the items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise specified, ordinal numbers such as "first" and "second" in embodiments of this application are used to distinguish between a plurality of objects, and are not used to limit a sequence, a time sequence, priorities, or importance of the plurality of objects.

It should be noted that, names of the foregoing messages are merely examples. With evolution of communication technologies, the name of any foregoing message may change. However, regardless of how the names of the messages change, provided that meanings of the messages are the same as those of the messages in this application, the messages fall within the protection scope of this application.

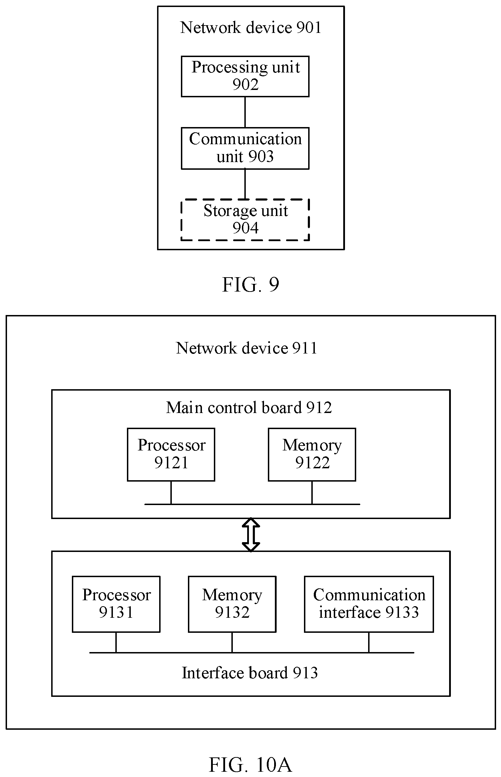

Based on the foregoing embodiments and a same concept, FIG. 9 is a schematic diagram of a network device according to an embodiment of this application. As shown in FIG. 9, the network device 901 may be a first network device or a second network device, or may be a chip or a circuit, for example, a chip or a circuit that may be disposed in the first network device or the second network device. The network device 901 shown in FIG. 9 may be any network device in FIG. 2A or FIG. 2B, or may be a network device configured to perform the method on the first network device side shown in FIG. 4 or FIG. 6, or may be a network device configured to perform the method on the second network device side shown in FIG. 4 or FIG. 6.

The network device 901 includes a processing unit 902 and a communication unit 903. Further, the network device 901 may further include a storage unit 904, or may not include a storage unit 904. That the storage unit 904 in the figure is in a dashed line further indicates that the storage unit is optional.

When the network device 901 is the first network device, in a possible implementation, the processing unit 902 may perform the following steps: receiving a first data packet through an ingress port of the communication unit 903, determining that a first forwarding path corresponding to the first data packet is faulty, and when there is no redundant path of the first forwarding path on the first network device, sending a first notification packet through the ingress port of the communication unit 903, where the first notification packet notifies that the first forwarding path is faulty, and the first notification packet is generated by a data plane of the first network device.

Because the first network device generates the first notification packet on the data plane, a speed at which the first network device generates the first notification packet is high. In addition, because the first notification packet is a data plane packet, the second network device that receives the first notification packet can quickly learn that the first forwarding path is faulty. Then the second network device can quickly process a received data packet based on obtained fault information. This can reduce a quantity of data packets discarded after a fault occurs and before a routing table update of each network device is completed.

In a possible implementation, the communication unit 903 further includes an egress port. The processing unit is specifically configured to: determine the egress port used to forward the first data packet, and determine, based on a status of the egress port, that the first forwarding path is faulty, where the egress port corresponds to the first forwarding path.

In a possible implementation, the storage unit 904 stores a port state table. The processing unit 902 is specifically configured to: obtain the status of the egress port based on the port state table, and when the status of the egress port is a specified state, determine that the first forwarding path is faulty.

In a possible implementation, the processing unit 902 is further configured to: periodically read, by using a component on the data plane, a value of a register used to record the status of the egress port, and update the status of the egress port in the port state table based on the value of the register.

In a possible implementation, the processing unit 902 is further configured to: send at least one probe packet through the egress port of the communication unit 903, where the at least one probe packet is generated by the data plane of the first network device; and update the status of the egress port in the port state table to the specified state when no probe packet in the at least one probe packet or no response packets of a plurality of consecutive probe packets is/are received within preset duration.

When the network device 901 is the second network device, in a possible implementation, the processing unit 902 may perform the following steps: receiving a first notification packet from the first network device by using the communication unit 903, receiving a second data packet through an ingress port of the communication unit 903, determining that a second forwarding path corresponding to the second data packet is faulty, and when there is no redundant path of the second forwarding path on the second network device, sending a second notification packet through the ingress port of the communication unit 903.

The first notification packet notifies that a first forwarding path is faulty, and the first forwarding path is a forwarding path corresponding to the first data packet. The first network device is a downstream network device of the second network device, and the second data packet and the first data packet have a same destination IP address. The second forwarding path includes the first forwarding path. The second notification packet notifies that the second forwarding path is faulty, and the second notification packet is generated by a data plane of the second network device.

Because the first notification packet is a data plane packet, the second network device can quickly learn that the first forwarding path is faulty. Then the second network device can quickly process a received data packet based on obtained fault information. This can reduce a quantity of data packets discarded after a fault occurs and before a routing table update of each network device is completed.

In a possible implementation, the processing unit 902 is further configured to store, on the data plane of the second network device based on the first notification packet, a correspondence between address information and a port on which the first notification packet is received.

In a possible implementation, the communication unit 903 further includes an egress port. The processing unit 902 is specifically configured to: when determining that a destination address of the second data packet matches the address information in the correspondence, and the egress port corresponding to the second data packet is the port in the correspondence, determine that the second forwarding path corresponding to the second data packet is faulty.

In a possible implementation, the processing unit 902 is further configured to: when determining that the second forwarding path corresponding to the second data packet is not faulty, send the second data packet through the second forwarding path. For example, when the second forwarding path corresponding to the second data packet is not faulty, the processing unit 902 may send the second data packet through a port corresponding to the second forwarding path in the communication unit 903.

For concepts, explanations, detailed descriptions, and other steps of the network device that are related to the technical solutions provided in embodiments of this application, refer to the descriptions of the content in the foregoing method embodiments or other embodiments. Details are not described herein again.

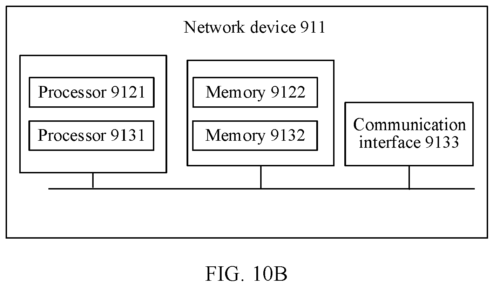

FIG. 10A and FIG. 10B show examples of several possible schematic structural diagrams of the network device in the system architecture in FIG. 2A or FIG. 2B. The network device 911 shown in FIG. 10A and FIG. 10B may be any network device in FIG. 2A or FIG. 2B, or may be a network device configured to perform the method on the first network device side shown in FIG. 4 or FIG. 6, or may be a network device configured to perform the method on the second network device side shown in FIG. 4 or FIG. 6.

As shown in FIG. 10A, the network device 911 includes a main control board 912 and an interface board 913.

The main control board 912 may include one or more processors (in FIG. 10A, a processor 9121 is used as an example for illustration). Optionally, the main control board 912 may further include a memory 9122. The interface board 913 may include one or more processors (in FIG. 10A, a processor 9131 is used as an example for illustration) and a communication interface 9133. The communication interface 9133 may also be referred to as an interface card. Optionally, the interface board 913 may further include a memory 9132.

In the network device 911 shown in FIG. 10B, a plurality of processors may be integrated together, for example, as shown in FIG. 10B. The processor 9121 and the processor 9131 may be integrated into one module, and the memory 9122 and the memory 9132 may also be integrated into one module.

FIG. 10A and FIG. 10B are examples of two possible schematic structural diagrams of the network device. In actual application, components, units, and modules in the network device 911 may be disposed in another manner.

The processor (for example, the processor 9121 and the processor 9131 shown in FIG. 10A or FIG. 10B) in embodiments of this application may be a chip. For example, the processor may be a field-programmable gate array (field-programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller (micro controller unit, MCU), a programmable logic device (programmable logic device, PLD), or another integrated chip.

The communication interface 9133 may be a transceiver module, configured to communicate with another device or a communication network. For example, the communication network may be an Ethernet, a radio access network (radio access network, RAN), a wireless local area network (wireless local area network, WLAN), or the like. For example, the transceiver module may be an apparatus such as a transceiver. Optionally, the communication interface 9133 may alternatively be a transceiver circuit located in the processor 9131, and is configured to implement signal input and signal output of the processor.

The memory (for example, the memory 9122 and the memory 9132 shown in FIG. 10A or FIG. 10B) may be an apparatus having a storage function. It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another appropriate type. The memory may independently exist and may be connected to the processor through a communication line. The memory may alternatively be integrated with the processor.

The memory 9132 is configured to store computer-executable instructions for performing the solutions in this application, and the processor 9131 controls execution. The processor 9131 is configured to execute the computer-executable instructions stored in the memory 9132, to implement a related method provided in embodiments of this application. Optionally, the computer-executable instructions in embodiments of this application may also be referred to as application program code. This is not specifically limited in embodiments of this application.

Alternatively, optionally, in embodiments of this application, the processor 9131 may perform a processing related function in a method provided in embodiments of this application, and the communication interface 9133 is responsible for communication with another device or a communication network. This is not specifically limited in embodiments of this application.

In a possible implementation, when a packet is a control plane packet, after the network device (for example, a switch) receives the packet (for example, receives the packet on a data plane), the network device needs to first perform "processing of sending the packet to a CPU". The CPU may be a general-purpose CPU in the network device, for example, may be a CPU that processes an internet protocol packet, for example, may be the processor 9121 in FIG. 10A or FIG. 10B.

For example, refer to FIG. 10A. The network device 911 receives a packet through the communication interface 9133 in the interface board 913. The packet is a control plane packet, and the network device 911 needs to send the packet to the processor 9121 in the main control board 912 for processing. After processing the packet, the processor 9121 in the main control board 912 may discard the packet, or send the packet to the processor 9131 in the interface board 913 again for processing, or may specify that the packet is to be forwarded through a specific port in an ASIC chip.

In still another possible implementation, when a packet is a data plane packet, after receiving the packet on the data plane, the network device directly processes and forwards the packet on the data plane. The packet is processed on the data plane, and may be processed by dedicated hardware or a chip in the network device, for example, the processor 9131 in FIG. 10A or FIG. 10B. For example, refer to FIG. 10A. The network device 911 receives a packet through the communication interface 9133 in the interface board 913. The packet is a data plane packet, and the processor 9131 in the interface board 913 processes and forwards the packet, that is, the packet does not need to be reported by the processor 9131 to the processor 9121 in the main control board 912 for processing.

In a possible implementation, when the network device 911 is configured to perform the method on the first network device side in the method shown in FIG. 4, the network device 911 may be considered as the first network device, and step 401, step 402, and step 403 may be performed by the processor 9131 based on data input by the communication interface 9133.

In a possible implementation, when the network device 911 is configured to perform the method on the second network device side in the method shown in FIG. 4, the network device 911 may be considered as the second network device, and step 404, step 405, and step 406 may be performed by the processor 9131 based on data input by the communication interface 9133. In other words, the second network device does not need to report the received first notification packet to the processor 9121, so that a processing speed of a data plane notification packet can be accelerated.

In a possible implementation, when the network device 911 is configured to perform the method on the first network device side in the method shown in FIG. 6, the network device 911 may be considered as the first network device, and the steps (for example, at least one of step 601, step 602, step 603, step 604, step 605, or step 606) performed on the first network device side may be performed by the processor 9131 in the network device based on data input by the communication interface 9133.

In a possible implementation, when the network device 911 is configured to perform the method on the second network device side in the method shown in FIG. 6, the network device 911 may be considered as the second network device, and the steps (for example, at least one of step 607, step 608, step 609, step 610, step 611, or step 612) performed on the second network device side may be performed by the processor 9131 in the network device based on data input by the communication interface 9133.

The notification information table and the port state table in embodiments of this application may be stored on the data plane, for example, may be stored in the memory 9132, so that the processor 9131 can quickly access the notification information table and/or the port state table from the data plane.

It should be noted that, when the network device 911 is configured to perform the method on the first network device side or the second network device side in the method shown in FIG. 4, the solution performed by the communication unit 903 in FIG. 9 may alternatively be implemented by the communication interface 9133 in FIG. 10A or FIG. 10B, the solution performed by the processing unit 902 in FIG. 9 may alternatively be implemented by the processor 9131 in FIG. 10A or FIG. 10B, and the solution performed by the storage unit 904 may alternatively be implemented by the memory 9132 in FIG. 10A or FIG. 10B.

For concepts, explanations, detailed descriptions, and other steps of the network device 911 that are related to the technical solutions provided in embodiments of this application, refer to the descriptions of the content in the foregoing method embodiments or other embodiments. Details are not described herein again.

Based on the method provided in embodiments of this application, this application further provides a computer program product. The computer program product includes computer program code or instructions. When the computer program code or instructions is/are run on a computer, the computer is enabled to perform the method in any one of the embodiments shown in FIG. 4 or FIG. 6.

Based on the method provided in embodiments of this application, this application further provides a computer-readable storage medium. The computer-readable medium stores program code. When the program code is run on a computer, the computer is enabled to perform the method in any one of the embodiments shown in FIG. 4 or FIG. 6.

According to the method provided in embodiments of this application, this application further provides a chip system. The chip system may include a processor. The processor is coupled to the memory, and may be configured to perform the method in any one of the embodiments shown in FIG. 4 or FIG. 6. Optionally, the chip system further includes the memory. The memory is configured to store a computer program (which may also be referred to as code or instructions). The processor is configured to invoke the computer program from the memory and run the computer program, so that a device on which the chip system is installed performs the method in any one of embodiments shown in FIG. 4 or FIG. 6.

According to the method provided in embodiments of this application, this application further provides a system, including the foregoing first network device and second network device.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disc, SSD)), or the like.

It should be noted that a part of this patent application document includes content protected by copyright. Except for making copies of patent documents of the Patent Office or recorded content of patent documents, the copyright owner reserves the copyright.

The network device in the foregoing apparatus embodiments corresponds to the first network device or the second network device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a specific function of the unit, refer to the corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as an internet interacting with other systems by using the signal).

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A fault handling method, comprising:
receiving, by a first network device, a first data packet through an ingress port;
determining, by the first network device, that a first forwarding path corresponding to the first data packet is faulty; and
sending, by the first network device, a first notification packet through the ingress port, wherein the first notification packet notifies that the first forwarding path is faulty, and the first notification packet is generated by a data plane of the first network device.

2. The method according to claim 1, wherein the determining, by the first network device, that a first forwarding path corresponding to the first data packet is faulty comprises:
determining, by the first network device, an egress port used to forward the first data packet, wherein the egress port corresponds to the first forwarding path; and
determining, by the first network device based on a status of the egress port, that the first forwarding path is faulty.

3. The method according to claim 2, wherein the first network device stores a port state table, and the determining, by the first network device based on a status of the egress port, that the first forwarding path is faulty comprises:
obtaining, by the first network device, the status of the egress port based on the port state table; and
when the status of the egress port is a specified state, determining, by the first network device, that the first forwarding path is faulty.

4. The method according to claim 3, wherein the method further comprises:
periodically reading, by the first network device by using a component on the data plane, a value of a register used to record the status of the egress port; and
updating, by the first network device, the status of the egress port in the port state table based on the value of the register.

5. The method according to claim 3, wherein the method further comprises:
sending, by the first network device, at least one probe packet through the egress port, wherein the at least one probe packet is generated by the data plane of the first network device; and
updating, by the first network device, the status of the egress port in the port state table to the specified state when the first network device does not receive a response packet for one probe packet or a plurality of consecutive probe packets in the at least one probe packet within preset duration.

6. The method according to any one of claims 1 to 5, wherein the first notification packet comprises indication information and address information, wherein
the indication information indicates that the first notification packet is a fault notification packet; and
the address information is carried in a payload of the first notification packet, and the address information comprises a destination internet protocol IP address of the first data packet and/or an IP address prefix corresponding to the destination IP address.

7. The method according to claim 6, wherein a packet header of the first notification packet further comprises information indicating the first data packet, wherein
the information indicating the first data packet comprises at least one of the following:
a source media access control MAC address of the first data packet, a destination MAC address of the first data packet, a source IP address of the first data packet, or a destination IP address of the first data packet.

8. The method according to claim 7, wherein the first notification packet meets at least one of the following:
a source MAC address of the first notification packet is the destination MAC address of the first data packet, and a destination MAC address of the first notification packet is the source MAC address of the first data packet; or
a source IP address of the first notification packet is the destination IP address of the first data packet, and a destination IP address of the first notification packet is the source IP address of the first data packet.

9. A fault handling method, wherein the method comprises:
receiving, by a second network device, a first notification packet from a first network device, wherein the first notification packet notifies that a first forwarding path is faulty, the first forwarding path is a forwarding path corresponding to a first data packet, and the first network device is a downstream network device of the second network device;
receiving, by the second network device, a second data packet through an ingress port, wherein the second data packet and the first data packet have a same destination internet protocol IP address;
determining, by the second network device, that a second forwarding path corresponding to the second data packet is faulty, wherein the second forwarding path comprises the first forwarding path; and
sending, by the second network device, a second notification packet through the ingress port, wherein the second notification packet notifies that the second forwarding path is faulty, and the second notification packet is generated by a data plane of the second network device.

10. The method according to claim 9, wherein the first notification packet comprises indication information and address information, wherein
the indication information indicates that the first notification packet is a fault notification packet; and
the address information is carried in a payload of the first notification packet, and the address information comprises a destination IP address of the first data packet and/or an IP address prefix corresponding to the destination IP address.

11. The method according to claim 10, wherein after the receiving, by a second network device, a first notification packet from a first network device, the method further comprises:
storing, by the second network device on the data plane of the second network device based on the first notification packet, a correspondence between the address information and a port on which the first notification packet is received.

12. The method according to claim 11, wherein the determining, by the second network device, that a second forwarding path corresponding to the second data packet is faulty comprises:
when determining that a destination address of the second data packet matches the address information in the correspondence, and an egress port corresponding to the second data packet is the port in the correspondence, determining, by the second network device, that the second forwarding path corresponding to the second data packet is faulty.

13. A network device, comprising a communication interface and a processor, wherein
the communication interface is configured to input and/or output data; and
the processor is configured to perform, based on the data input by the communication interface, the method according to any one of claims 1 to 8.

14. A network device, comprising a communication interface and a processor, wherein
the communication interface is configured to input and/or output data; and
the processor is configured to perform, based on the data input by the communication interface, the method according to any one of claims 9 to 12.

15. A system, comprising the network device according to claim 13 and the network device according to claim 14.

16. A computer-readable storage medium, wherein the computer-readable storage medium stores computer-executable instructions, and when the computer-executable instructions are invoked by a computer, the method according to any one of claims 1 to 8 is performed; or the method according to any one of claims 9 to 12 is performed.
